# EUROPÄISCHE PATENTSCHRIFT

(11) **EP 2 884 845 B1**
(45) Veröffentlichungstag und Bekanntmachung des Hinweises auf die Patenterteilung: **26.09.2018**
(21) Anmeldenummer: 13742420.6
(22) Anmeldetag: 22.07.2013
(51) Int. Cl.: A21C 15/04

(54) **ANLAGE ZUM HERSTELLEN VON ENDPRODUKTEN DURCH DAS ZERSCHNEIDEN VON FLACH- UND HOHLWAFFELBLÖCKEN**
SYSTEM FOR PRODUCING END PRODUCTS BY CUTTING FLAT AND HOLLOW WAFER BLOCKS
INSTALLATION POUR LA FABRICATION DE PRODUITS FINALS PAR DÉCOUPAGE DE BLOCS DE GAUFRETTES PLATES ET DE GAUFRETTES CREUSES

(30) Priorität: 16.08.2012 AT 8912012
(43) Veröffentlichungstag der Anmeldung: 24.06.2015
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); DRAPELA, Norbert, A-2103 Langenzersdorf (AT); KOLETNIK, Erich, A-3400 Klosterneuburg/Kierling (AT)
(74) Vertreter: Puchberger & Partner Patentanwälte
(86) Internationale Anmeldenummer: PCT/EP2013/065377
(87) Internationale Veröffentlichungsnummer: WO 2014/026826

(56) Entgegenhaltungen:
- AT-B- 363 413
- DE-A1- 1 657 132
- DE-A1- 2 754 200
- US-A- 5 365 816

## Beschreibung

Die Erfindung bezieht sich auf eine Anlage zum Herstellen von Endprodukten durch das Zerschneiden von Flach- und Hohlwaffelblöcken.

In bekannten, als Waffelblockschneider bezeichneten Anlagen werden großformatige, rechteckige Waffelblöcke (beispielsweise L x B gleich 730 x 380 mm) in zwei zueinander senkrechten Richtungen in viele kleine Waffelstücke zerschnitten, die zumeist eine mundgerechte Größe (beispielsweise L x B x H gleich 49 x 17 x 17 mm) besitzen. Die kleinen Waffelstücke werden in der Praxis als Schnitten oder Waffelschnitten bezeichnet. Derartige Anlagen sind z. B. aus den Dokumenten AT 363 413 B, AT 412 250 B, GB 2 047 647 A, GB 2 348 356 A, GB 2 348 356 B, US 4,359,920 A, US 4,579,030 A, US 6,415,698 B1 bekannt. In den bekannten Anlagen können nur rechteckige Endprodukte hergestellt werden, die durch ebene Flächen seitlich begrenzt sind. Eine Vorrichtung zur Herstellung von runden Waffelplatten mit den Merkmalen des Oberbegriffs des ersten Anspruchs wird in der deutschen Patentanmeldung DE 16 57 132 A1 offenbart. Hier wird eine Stanzvorrichtung für die Herstellung verwendet.

Die Erfindung schlägt eine neue Anlage zum Herstellen von Endprodukten vor, die durch das Zerschneiden von Flach- und Hohlwaffelblöcken entstehen. In der Anlage sind eine Eingabestation für die Blöcke, zumindest eine Schneidestation zum Zerschneiden der Blöcke und eine Ausgabestation für die Endprodukte vorgesehen. In der Anlage ist eine Hauptschneidestation vorgesehen, in der eine die Blöcke durch Konturschnitte zerschneidende Konturschneidvorrichtung quer zu einer geradlinigen Transportbahn angeordnet ist, die sich in Längsrichtung der Anlage durch die Hauptschneidestation erstreckt. Entlang der Transportbahn ist eine Hauptfördereinrichtung angeordnet, von der die Blöcke längs der Transportbahn durch die Konturschneidvorrichtung befördert werden. Die Konturschneidvorrichtung sieht zumindest ein Konturschneidmodul vor, das mit zumindest einem in Querrichtung der Anlage hin und her bewegbaren Schneidwerkzeug versehen ist, das in den die Konturschneidvorrichtung in Längsrichtung der Anlage passierenden Blöcken einen Konturschnitt erzeugt.

Beim Erzeugen der Konturschnitte werden die von der Hauptfördereinrichtung erzeugten Längsbewegungen der Blöcke mit den von der Konturschneidvorrichtung erzeugten Querbewegungen des Schneidwerkzeugs kombiniert. Die Kombination dieser Bewegungen wird auf das Schneidwerkzeug der Konturschneidvorrichtung übertragen und das Schneidwerkzeug erzeugt in den Blöcken Konturschnitte, deren Verlauf sich aus dieser Bewegungskombination ergibt.

In der Anlage können die Längsbewegungen der Blöcke und die Querbewegungen des Schneidwerkzeugs während der Erzeugung der Konturschnitte unterschiedlich variiert werden. Aus jeder Veränderung einer dieser beiden Bewegungen ergib sich ein neuer Verlauf des durch die Bewegungskombination erzeugten Konturschnitts. Durch unterschiedliche Variationen dieser beiden Bewegungen können Konturschnitte erzeugt werden, die von der Längsrichtung der Anlage mehr oder weniger abweichende Teilabschnitte aufweisen. Die Teilabschnitte können eine geradlinige Kontur oder eine bogenförmig gekrümmte Kontur oder eine frei geformte Kontur aufweisen. Die Teilabschnitte können parallel zur Längsrichtung der Anlage oder schräg dazu angeordnet sein.

Die Blöcke werden in Längsrichtung durch die Konturschneidvorrichtung bewegt, während diese ihr Schneidwerkzeug oder ihre Schneidwerkzeuge in Querrichtung hin und her bewegt. Auf diese Weise kann die neue Anlage in den Blöcken sehr unterschiedlich verlaufende Konturschnitte erzeugen. Die Konturschnitte sind mit ihren unterschiedlich verlaufenden Teilabschnitten an die Umrisse der herzustellenden Endprodukte angepasst. Die Blöcke werden durch die Konturschnitte zerschnitten und dabei in Endprodukte und allfällige Blockreste zerteilt.

Die erfindungsgemäße Anlage ermöglicht die Herstellung von Endprodukten mit sehr unterschiedlich gestalteten Umrissen. Aus den zumeist rechteckigen Blöcken können durch die Konturschnitte Endprodukte herausgeschnitten werden, bei denen der Umriss z. B. einem Tortenstück, einer Kreisscheibe, einer ebenen Figur, einem 3-blättrigen Kleeblatt, einem 4-blättrigen Kleeblatt oder einem Symbol entspricht. In der erfindungsgemäßen Anlage können auch rechteckige oder fächerförmige Endprodukte hergestellt werden und auch Endprodukte, bei denen der Umriss geradlinige, kreisbogenförmige oder wellenförmige Teilstücke besitzt.

Das Konturschneidmodul der Konturschneidvorrichtung kann auch zwei oder mehrere in Querrichtung nebeneinander angeordnete Schneidwerkzeuge besitzen, die aus einem Block zwei oder mehrere in Querrichtung nebeneinander angeordnete Endprodukte herausschneiden.

Gemäß einem weiteren Merkmal der Erfindung kann vorgesehen sein, dass die Konturschneidvorrichtung zwei in Längsrichtung der Anlage hintereinander angeordnete und zwei unterschiedliche Konturschnitte erzeugende Konturschneidmodule aufweist.

Diese Ausbildung erlaubt es, die Blöcke mit zwei innerhalb der Blöcke unterschiedlich verlaufenden Konturschnitten zu zerschneiden, wobei einander gegenüberliegende Teilabschnitte der beiden Konturschnitte sich gegenseitig zu dem Umriss eines vollständigen Endproduktes ergänzen. Jedes der beiden Konturschneidmodule erzeugt mit seinem in Querrichtung hin und her bewegten Schneidwerkzeug einen halben Umriss des gewünschten Endproduktes. Die Endprodukte können kreisrunde Scheiben sein. Das eine Konturschneidmodul erzeugt mit seinem Schneidwerkzeug einen Konturschnitt, bei dem ein Teilabschnitt der linken Hälfte des kreisförmigen Umrisses entspricht. Das andere Konturschneidmodul erzeugt mit seinem Schneidwerkzeug einen Konturschnitt, bei dem ein Teilabschnitt der rechten Hälfte des kreisförmigen Umrisses entspricht. Die Endprodukte können auch Rauten sein, wobei dann der von dem einen Konturschneidmodul erzeugte Konturschnitt zwei geradlinige Teilabschnitte enthält, die der linken Rautenhälfte entsprechen, und der vom zweiten Konturschneidmodul erzeugte Konturschnitt zwei geradlinige Teilabschnitte enthält, die der rechten Rautenhälfte entsprechen.

Gemäß einem weiteren Merkmal der Erfindung kann vorgesehen sein, dass die Konturschneidvorrichtung drei in Längsrichtung der Anlage hintereinander angeordnete und drei unterschiedliche Konturschnitte erzeugende Konturschneidmodule aufweist.

Diese Ausbildung erlaubt es, in der erfindungsgemäßen Anlage Endprodukte herzustellen, bei denen der Umriss aus drei Teilstücken besteht, die jeweils von einem der drei Konturschneidmodule der Konturschneidvorrichtung erzeugt werden. Es können Endprodukte hergestellt werden, bei denen der Umriss aus zwei schräg verlaufenden, geradlinigen Teilabschnitten und einem bogenförmigen Teilabschnitt besteht.

Gemäß der Erfindung kann bei der Konturschneidvorrichtung weiters folgendes vorgesehen sein.

Das Konturschneidmodul kann ein Schneidkopf sein, der in Querrichtung der Anlage verfahrbar ist und zumindest ein vertikal angeordnetes Schneidwerkzeug trägt, das die Transportbahn der Blöcke in vertikaler Richtung durchsetzt.

Bei dieser Ausbildung wird der Schneidkopf dem Verlauf des Konturschnitts entsprechend in Querrichtung der Anlage hin und her gefahren, während ein Block in Längsrichtung der Anlage durch die Konturschneidvorrichtung geschoben wird. Das Schneidwerkzeug des Schneidkopfs erzeugt in dem Block einen Konturschnitt, der aus der Kombination der Längsbewegungen des Blocks mit den Querbewegungen des Schneidkopfs entsteht.

Der Schneidkopf kann oberhalb der Transportbahn der Blöcke angeordnet sein und zumindest ein Schneidwerkzeug tragen, das von ihm nach unten absteht und die unterhalb von ihm angeordnete Transportbahn der Blöcke in vertikaler Richtung durchsetzt.

Der Schneidkopf kann unterhalb der Transportbahn der Blöcke angeordnet sein und zumindest ein Schneidwerkzeug tragen, das von ihm nach oben absteht und die oberhalb von ihm angeordnete Transportbahn der Blöcke in vertikaler Richtung durchsetzt.

Der Schneidkopf kann auch zwei oder mehrere in Querrichtung nebeneinander angeordnete Schneidwerkzeuge besitzen, die aus einem Block zwei oder mehrere in Querrichtung nebeneinander angeordnete Endprodukte herausschneiden.

Gemäß der Erfindung kann das Konturschneidmodul ein Antriebsmodul aufweisen, das mit dem Schneidkopf verbunden ist und die während des Konturschnitts in Querrichtung der Anlage verlaufenden Bewegungen des Schneidkopfs erzeugt.

Das Antriebsmodul kann bei einem oberhalb der Transportbahn der Blöcke angeordneten Schneidkopf über dem Schneidkopf oder seitlich neben dem Schneidkopf angeordnet sein. Das Antriebsmodul kann bei einem unterhalb der Transportbahn der Blöcke angeordneten Schneidkopf unterhalb vom Schneidkopf oder seitlich neben dem Schneidkopf angeordnet sein.

Das mit dem Schneidkopf verbundene Antriebsmodul kann eine Kontur-Schablone enthalten, von der die während des Konturschnittes in Querrichtung der Anlage verlaufenden Bewegungen des Schneidkopfs abgenommen werden. Diese Ausbildung ermöglicht einen raschen Wechsel des vom Schneidkopf erzeugten Konturschnitts durch Austauschen der Kontur-Schablone.

Das mit dem Schneidkopf verbundene Antriebsmodul kann mit einer die Kontur des Endproduktes von einer Kontur-Schablone oder einem Originalmodell abnehmenden Kopiereinrichtung gekoppelt sein. Bei dieser Ausbildung können die den Verlauf des Konturschnitts bestimmenden, in Querrichtung der Anlage verlaufenden Bewegungen des Schneidkopfs direkt von der Kontur-Schablone bzw. vom Originalmodell abgenommen werden.

Im Antriebsmodul kann eine den Schneidkopf in Querrichtung der Anlage hin und her bewegende Bewegungseinrichtung vorgesehen sein, die mit einem Antriebsmotor gekoppelt ist, bei dem die Erzeugung der während des Konturschnitts in Querrichtung der Anlage verlaufenden Bewegungen des Schneidkopfs in das Steuerungsprogramm des Antriebsmotors integriert ist.

Als Antriebsmodul kann ein den Schneidkopf in Querrichtung der Anlage hin und her bewegender Linearmotor vorgesehen sein, bei dem die Erzeugung der während des Konturschnitts in Querrichtung der Anlage verlaufenden Bewegungen des Schneidkopfs in das Steuerungsprogramm des Linearmotors integriert ist.

Gemäß der Erfindung kann bei der Konturschneidvorrichtung weiters folgendes vorgesehen sein.

Das Konturschneidmodul kann einen in Querrichtung der Anlage verfahrbaren Konturschneidrahmen mit zumindest einen vertikal angeordneten Schneiddraht und ein mit dem Konturschneidrahmen verbundenes Antriebsmodul aufweisen, das die während des Konturschnitts in Querrichtung der Anlage verlaufenden Bewegungen des Konturschneidrahmens erzeugt.

Bei dieser Ausbildung wird der Konturschneidrahmen durch das mit ihm verbundene Antriebsmodul dem Verlauf des Konturschnitts entsprechend in Querrichtung der Anlage hin und her gefahren, während ein Block von der Hauptfördereinrichtung in Längsrichtung der Anlage durch die Konturschneidvorrichtung geschoben wird. Der Konturschneidrahmen erzeugt mit seinem Schneiddraht in dem Block einen Konturschnitt, der durch die Kombination der in Querrichtung der Anlage verlaufenden Bewegungen des Konturschneidrahmens mit den in Längsrichtung der Anlage verlaufenden Bewegungen des Blocks entsteht.

Das mit dem Konturschneidrahmen verbundene und diesen in Querrichtung der Anlage hin und her bewegende Antriebsmodul kann oberhalb vom Konturschneidrahmen angeordnet sein. Das Antriebsmodul kann auch unterhalb vom Konturschneidrahmen oder seitlich neben diesem angeordnet sein.

Das mit dem Konturschneidrahmen verbundene Antriebsmodul kann eine Kontur-Schablone enthalten, von der die während des Konturschnittes in Querrichtung der Anlage verlaufenden Bewegungen des Konturschneidrahmens abgenommen werden. Diese Ausbildung ermöglicht einen raschen Wechsel des vom Konturschneidrahmen erzeugten Konturschnitts durch Austauschen der Kontur-Schablone.

Das mit dem Konturschneidrahmen verbundene Antriebsmodul kann mit einer die Kontur des Endproduktes von einer Kontur-Schablone oder einem Originalmodell abnehmenden Kopiereinrichtung gekoppelt sein. Bei dieser Ausbildung können die den Verlauf des Konturschnitts bestimmenden, in Querrichtung der Anlage verlaufenden Bewegungen des Konturschneidrahmens direkt von der Kontur-Schablone bzw. vom Originalmodell abgenommen werden.

Im Antriebsmodul kann eine mit einem Antriebsmotor gekoppelte Bewegungseinrichtung vorgesehen sein, die den Konturschneidrahmen in Querrichtung der Anlage hin und her bewegt, und die Erzeugung der während des Konturschnitts in Querrichtung der Anlage verlaufenden Bewegungen des Konturschneidrahmens kann in das Steuerungsprogramm des Antriebsmotors integriert sein. Der Antriebsmotor kann als Servomotor und die Bewegungseinrichtung kann als ein sich in Querrichtung der Anlage erstreckender Kugelgewindespindeltrieb ausgebildet sein.

Als Antriebsmodul kann ein den Konturschneidrahmen in Querrichtung der Anlage hin und her bewegender Linearmotor vorgesehen sein, bei dem die Erzeugung der während des Konturschnitts in Querrichtung der Anlage verlaufenden Bewegungen des Konturschneidrahmens in das Steuerungsprogramm des Linearmotors integriert ist.

Der Konturschneidrahmen kann zwei oder mehrere, vertikal angeordnete Schneidedrähte enthalten, die in Querrichtung der Anlage im Abstand von einander angeordnet sind.

Gemäß einem weiteren Merkmal der Erfindung kann vorgesehen sein, dass die Konturschneidvorrichtung zumindest ein zusätzliches Schneidmodul vorsieht, das mit zumindest einem stationären Schneidwerkzeug versehen ist, das in den Blöcken einen zur Längsrichtung der Anlage parallelen, geraden Schnitt erzeugt. Das zusätzliche Schneidmodul kann mit einem stationären Schneidrahmen versehen sein, der zumindest einen, im wesentlichen vertikal angeordneten Schneiddraht enthält.

Gemäß der Erfindung kann in der Hauptschneidestation weiters folgendes vorgesehen sein.

Der Konturschneidvorrichtung kann eine hintere Auflageplatte unmittelbar vorgelagert sein. Über der hinteren Auflageplatte kann eine die Transportbahn nach oben begrenzende, gegebenenfalls in der Höhe verstellbare, obere Platte vorgesehen sein. Diese Platte verhindert ein Aufkippen der auf der hinteren Auflageplatte liegenden Blöcke, während diese durch die Konturschneidvorrichtung geschoben werden. Über der hinteren Auflageplatte kann zumindest eine die Transportbahn seitlich begrenzende Führungsleiste vorgesehen sein. Gegebenenfalls kann zu beiden Seiten der Transportbahn jeweils zumindest eine Führungsleiste angeordnet sein. Bei dieser Ausbildung können sich die Blöcke beim Passieren der Konturschneidvorrichtung an einer Führungsleiste seitlich abstützen.

Der Konturschneidvorrichtung kann eine vordere Auflageplatte unmittelbar nachgeordnet sein. Über der vorderen Auflageplatte kann eine die Transportbahn nach oben begrenzende, gegebenenfalls in der Höhe verstellbare, obere Platte vorgesehen sein. Diese Platte verhindert ein Aufkippen der aus der Konturschneidvorrichtung austretenden Endprodukte und Blockreste. Über der vorderen Auflageplatte kann zumindest eine die Transportbahn seitlich begrenzende Führungsleiste vorgesehen sein. Gegebenenfalls kann zu beiden Seiten der Transportbahn jeweils zumindest eine Führungsleiste angeordnet sein. Bei dieser Ausbildung können sich die aus der Konturschneidvorrichtung austretenden Blöcke an einer Führungsleiste seitlich abstützen.

In weiterer Ausgestaltung der Erfindung kann folgendes vorgesehen sein.

Die Anlage ist mit einer in Längsrichtung der Anlage verlaufenden, geradlinigen Transportbahn versehen, die sich von der Eingabestation durch die Hauptschneidestation hindurch bis in die Ausgabestation erstreckt. Die Konturschneidvorrichtung ist in der Hauptschneidestation quer zu der geradlinigen Transportbahn angeordnet. Der Konturschneidvorrichtung ist ein endloses Produktförderband nachgeordnet, das die Endprodukte aufnimmt und sich entlang der geradlinigen Transportbahn bis in die Ausgabestation der Anlage erstreckt.

Diese Ausbildung sieht eine In-Line-Ausführung der erfindungsgemäßen Anlage vor. Eingabestation, Hauptschneidestation und Ausgabestation sind in Längsrichtung der Anlage in einer geraden Linie hintereinander angeordnet. Die Blöcke werden entlang der geradlinigen Transportbahn von der Eingabestation bis in die Ausgabestation befördert. Beim Passieren der Hauptschneidestation werden die Blöcke durch die von der Konturschneidvorrichtung erzeugten Konturschnitte zerschnitten und in Endprodukte und Blockreste zerteilt. Die Endprodukte und Blockreste werden vom Produktförderband aufgenommen und zur Ausgabestation transportiert. Durch die In-Line-Ausführung der Anlage kann eine relativ geringe Baubreite der gesamten Anlage realisiert werden, was bei beschränkten Platzverhältnissen am Aufstellungsort der Anlage von Vorteil ist.

Bei der In-Line-Ausführung der Anlage kann weiters folgendes vorgesehen sein.

Über dem Produktförderband kann eine die Transportbahn nach oben begrenzende, gegebenenfalls in der Höhe verstellbare, obere Platte vorgesehen sein. Die obere Platte verhindert ein Aufkippen der aus der Konturschneidvorrichtung austretenden Endprodukte und Blockreststücke.

Über dem Produktförderband kann zumindest eine die Transportbahn seitlich begrenzende Führungsleiste vorgesehen sein. Gegebenenfalls kann zu beiden Seiten der Transportbahn jeweils zumindest eine Führungsleiste angeordnet sein. Bei dieser Ausbildung können sich die aus der Konturschneidvorrichtung austretenden Blöcke an einer Führungsleiste seitlich abstützen.

Auch bei der In-Line-Ausführung der Anlage kann der Konturschneidvorrichtung eine hintere Auflageplatte unmittelbar vorgelagert sein. Über der hinteren Auflageplatte kann ein die Transportbahn der Blöcke nach oben begrenzender, gegebenenfalls in der Höhe verstellbarer Niederhalter angeordnet sein. Der Niederhalter verhindert ein Aufkippen der auf der hinteren Auflageplatte liegenden Blöcke, während diese durch die Konturschneidvorrichtung geschoben werden. Über der hinteren Auflageplatte kann zumindest eine die Transportbahn seitlich begrenzende Führungsleiste vorgesehen sein. Gegebenenfalls kann zu beiden Seiten der Transportbahn jeweils zumindest eine Führungsleiste angeordnet sein. Bei dieser Ausbildung können sich die Blöcke beim Passieren der Konturschneidvorrichtung an einer Führungsleiste seitlich abstützen.

Bei der In-Line-Ausführung der Anlage kann der Hauptschneidestation eine die Blöcke in Querrichtung der Anlage zerschneidende, erste Schneidestation vorgelagert sein, in der eine erste Schneidvorrichtung mit quer zur Transportbahn hin und her bewegbaren Messern vorgesehen ist.

Bei dieser Ausbildung werden die Blöcke entlang der geradlinigen Transportbahn von der Eingabestation durch die erste Schneidestation zur Hauptschneidestation befördert. In der ersten Schneidestation werden die auf der Transportbahn liegenden, unbewegten Blöcke durch die quer zur Transportbahn hin und her bewegbaren Messer der ersten Schneidvorrichtung in Querrichtung der Anlage in Leisten zerschnitten. Dabei entstehen in Querrichtung der Anlage langgestreckte Leisten, die in Längsrichtung der Anlage hintereinander angeordnet sind. Die Leisten werden entlang der geradlinigen Transportbahn zur Hauptschneidestation befördert. Dort werden die Leisten durch die von der Konturschneidvorrichtung erzeugten Konturschnitte zerschnitten. Der Verlauf der Konturschnitte ist an den Umriss der herzustellenden Endprodukte angepasst. Beim Zerschneiden der Leisten entstehen daher Endprodukte mit einem durch die Konturschnitte erzeugten Umriss. Die Endprodukte und allfällige Schneidreste der Leisten werden entlang der geradlinigen Transportbahn aus der Hauptschneidestation abtransportiert. Auf diese Weise können rechteckigen Blöcke in kleine Endprodukte zerschnitten werden, die aufgrund ihrer geringen Größe innerhalb eines rechteckigen Blocks zu mehreren in einer Querreihe nebeneinander und in mehreren Querreihen hintereinander angeordnet werden können. Die rechteckigen Blöcke werden in der ersten Schneidestation in Querrichtung der Anlage in Leisten zerschnitten, die jeweils einer Querreihe von Endprodukten entspricht. Die Leisten werden in Längsrichtung der Anlage durch die Hauptschneidestation befördert und dort durch die von der Konturschneidvorrichtung erzeugten Konturschnitte in die einzelnen Endprodukte zerschnitten.

Gemäß der Erfindung kann in der Hauptschneidestation folgendes vorgesehen sein.

Es kann eine Hauptschneidestation vorgesehen sein, in der eine hintere Auflageplatte und eine Transporteinheit der Hauptfördereinrichtung der Konturschneidvorrichtung vorgelagert sind, wobei die Transporteinheit die Blöcke entlang der geradlinigen Transportbahn in Längsrichtung der Anlage vorwärts bewegt und einen entlang der hinteren Auflageplatte in Längsrichtung der Anlage verschiebbaren, hinteren Blockschieber besitzt.

Bei dieser Ausbildung werden die Blöcke der Hauptschneidestation in Querrichtung der Anlage zugeführt. In der Hauptschneidestation liegen die Blöcke auf der hinteren Auflageplatte zwischen dem hinteren Blockschieber und der Konturschneidvorrichtung. Die Blöcke werden von der Transporteinheit mit Hilfe des hinteren Blockschiebers entlang der geradlinigen Transportbahn durch die Konturschneidvorrichtung geschoben. Beim Passieren der Konturschneidvorrichtung werden die Blöcke durch die von der Konturschneidvorrichtung erzeugten Konturschnitte zerschnitten. Dabei werden die Endprodukte aus den Blöcken herausgeschnitten. Die beim Zerschneiden der Blöcke entstandenen Endprodukte haben einen durch die Konturschnitte erzeugten und dem Verlauf der Konturschnitte entsprechenden Umriss. Die Endprodukte treten an der Vorderseite der Konturschneidvorrichtung aus der Konturschneidvorrichtung aus.

Erfindungsgemäß kann der Konturschneidvorrichtung ein endloses Produktförderband nachgeordnet sein, das die Endprodukte aufnimmt und sich bis in die Ausgabestation der Anlage erstreckt. Bei dieser Ausbildung werden die in Längsrichtung der Anlage aus der Konturschneidvorrichtung austretenden Endprodukte in Längsrichtung der Anlage abtransportiert.

Erfindungsgemäß kann eine der Konturschneidvorrichtung nachgeordnete, vordere Auflageplatte und ein entlang der vorderen Auflageplatte in Querrichtung der Anlage verschiebbarer Querschieber vorgesehen sein. Bei dieser Ausbildung werden die in Längsrichtung der Anlage aus der Konturschneidvorrichtung austretenden Endprodukte in Querrichtung der Anlage abtransportiert.

Gemäß der Erfindung kann in der Hauptschneidestation folgendes vorgesehen sein.

Die Konturschneidvorrichtung ist zwischen einer hinteren Auflageplatte und einer vorderen Auflageplatte angeordnet. Die Hauptfördereinrichtung sieht eine der hinteren Auflageplatte vorgelagerte, erste Transporteinheit und eine der vorderen Auflageplatte nachgeordnete, zweite Transporteinheit vor. Die erste Transporteinheit bewegt die Blöcke in Längsrichtung der Anlage vorwärts und ist mit einem entlang der hinteren Auflageplatte in Längsrichtung der Anlage verschiebbaren, hinteren Blockschieber versehen. Die zweite Transporteinheit bewegt die Blöcke in Längsrichtung der Anlage rückwärts und ist mit einem entlang der vorderen Auflageplatte in Längsrichtung der Anlage verschiebbaren, vorderen Blockschieber versehen.

Diese Ausbildung der Hauptschneidestation erlaubt es, in den Blöcken Konturschnitte zu erzeugen, bei denen die Blöcke beim Passieren der Konturschneidvorrichtung durch die beiden Transporteinheiten der Hauptfördereinrichtung in Längsrichtung der Anlage nur vorwärts, oder vorwärts und rückwärts bewegt werden. Die Blöcke werden beim Passieren der Konturschneidvorrichtung durch zumindest ein in Querrichtung der Anlage hin und her bewegtes Schneidwerkzeug der Konturschneidvorrichtung in die einzelnen Endprodukte zerschnitten.

Die mit zwei Transporteinheiten ausgerüstete Hauptschneidestation kann mit einer Konturschneidvorrichtung ausgerüstet sein, die nur ein einziges Konturschneidmodul aufweist, das nur ein einziges Schneidwerkzeug besitzt, das vom Konturschneidmodul in Querrichtung der Anlage hin und her bewegt wird.

Diese Konfiguration der Hauptschneidestation erlaubt es, Endprodukte mit einem einzigen Konturschnitt aus den Blöcken auszuschneiden. Der Verlauf des vom Schneidwerkzeug der Konturschneidvorrichtung erzeugten Konturschnitts ist an den Umriss des herzustellenden Endprodukts angepasst. Das Schneidwerkzeug wird durch das Konturschneidmodul in Querrichtung der Anlage hin und her bewegt, während ein Block von den beiden Transporteinheiten der Hauptfördereinrichtung in Längsrichtung der Anlage vorwärts und rückwärts bewegt wird. Eine Hälfte des Konturschnitts wird während der Vorwärtsbewegung des Blocks erzeugt, die andere Hälfte während der Rückwärtsbewegung des Blocks. Der Block wird von der hinteren Auflageplatte nach vorne auf die vordere Auflageplatte geschoben und von der vorderen Auflageplatte nach hinten auf die hintere Auflageplatte. Für die Erzeugung eines Konturschnitts, der dem Umfang einer Kreisscheibe entspricht, wird der Block nur einmal vorwärts und einmal rückwärts bewegt. Für die Erzeugung eines Konturschnitts, der dem unregelmäßigen Umfang eines 4-blättrigen Kleeblatts entspricht, wird der Block während der Erzeugung der ersten Hälfte des Konturschnitts mehrfach vorwärts und rückwärts bewegt und ebenso während der Erzeugung der zweiten Hälfte des Konturschnitts. Nach der Ausführung des Konturschnitts liegt der zerschnittene Block samt dem Endprodukt auf der hinteren Auflageplatte. Für den Abtransport der zerschnittenen Blöcke und der Endprodukte aus der Hauptschneidestation kann ein entlang der hinteren Auflageplatte in Querrichtung der Anlage verschiebbarer Querschieber vorgesehen sein. Bei der Konturschneidvorrichtung kann das Konturschneidmodul zwei oder mehrere, in Querrichtung der Anlage nebeneinander angeordnete Schneidwerkzeuge besitzen, die vom Konturschneidmodul in Querrichtung der Anlage hin und her bewegt werden. Die Schneidwerkzeuge schneiden aus einem Block zwei oder mehrere in Querrichtung der Anlage nebeneinander angeordnete Endprodukte, wie z. B. 4-blättrige Kleeblätter oder Kreisscheiben, aus.

Die mit zwei Transporteinheiten ausgerüstete Hauptschneidestation kann mit einer Konturschneidvorrichtung ausgerüstet sein, die zwei in Längsrichtung der Anlage hintereinander angeordnete Konturschneidmodule enthält, die jeweils nur ein einziges Schneidwerkzeug besitzen, das von dem jeweiligen Konturschneidmodul in Querrichtung der Anlage hin und her bewegt wird.

Diese Konfiguration der Hauptschneidestation erlaubt es, Endprodukte mit zwei gleichzeitig ausgeführten Konturschnitten aus den Blöcken auszuschneiden. Die Konturschnitte werden von den Konturschneidmodulen erzeugt, die unabhängig von einander in Querrichtung der Anlage hin und her bewegt werden. Die beiden Konturschneidmodule erzeugen in jedem Block zwei von einander getrennte, im Block unterschiedlich verlaufende Konturschnitte. Beide Konturschnitte beginnen am vorderen Rand des Blocks und enden am hinteren Rand des Blocks. Die beiden Konturschnitte enthalten Teilabschnitte, die innerhalb des Blocks einander gegenüberliegen und einander gegenseitig zum vollständigen Umriss des Endprodukts ergänzen. Der eine Konturschnitt erzeugt die linke Hälfte vom Umriss des Endprodukts und der andere Konturschnitt erzeugt die rechte Hälfte vom Umriss des Endprodukts. Bei der Erzeugung des Umrisses einer Kreisscheibe wird der Block von den beiden Transporteinheiten der Hauptfördereinrichtung in Längsrichtung der Anlage nur vorwärts bewegt. Bei der Erzeugung des Umrisses eines 4-blättrigen Kleeblatts wird der Block von den beiden Transporteinheiten der Hauptfördereinrichtung in Längsrichtung der Anlage vorwärts und rückwärts bewegt. Während der Rückwärtsbewegung des Blocks werden jene Teilabschnitte des Kleeblattumrisses erzeugt, die eine entgegen der Vorschubrichtung der Blöcke rückwärts verlaufende Kontur besitzen. Nach der Ausführung der beiden Konturschnitte liegt der zerschnittene Block samt dem Endprodukt auf der vorderen Auflageplatte. Für den Abtransport der zerschnittenen Blöcke und Endprodukte kann ein entlang der vorderen Auflageplatte in Querrichtung der Anlage verschiebbarer Querschieber vorgesehen sein.

Gemäß der Erfindung kann bei der Hauptfördereinrichtung folgendes vorgesehen sein.

In der ersten Transporteinheit kann ein mit dem hinteren Blockschieber verbundenes Antriebsmodul vorgesehen sein, das die während des Konturschnittes in Längsrichtung der Anlage verlaufenden Bewegungen des hinteren Blockschiebers erzeugt.

Im Antriebsmodul der ersten Transporteinheit kann eine mit einem Antriebsmotor gekoppelte Bewegungseinrichtung vorgesehen sein, die den hinteren Blockschieber in Längsrichtung der Anlage hin und her bewegt, und die Erzeugung der während des Konturschnitts in Längsrichtung der Anlage verlaufenden Bewegungen des hinteren Blockschiebers kann in das Steuerungsprogramm des Antriebsmotors integriert sein.

Im Antriebsmodul der ersten Transporteinheit kann der Antriebsmotor als Servomotor ausgebildet und eine Bewegungseinrichtung vorgesehen sein, die als Kugelgewindespindeltrieb ausgebildet ist, der sich in Längsrichtung der Anlage erstreckt.

Die erste Transporteinheit kann mit einem mit dem hinteren Blockschieber gekoppelten, den hinteren Blockschieber in Längsrichtung der Anlage hin und her bewegenden Linearmotor versehen sein, bei dem die Erzeugung der während des Konturschnittes in Längsrichtung der Anlage verlaufenden Bewegungen des hinteren Blockschiebers in das Steuerungsprogramm des Linearmotors integriert ist.

In der zweiten Transporteinheit kann ein mit dem vorderen Blockschieber verbundenes Antriebsmodul vorgesehen sein, das die während des Konturschnittes in Längsrichtung der Anlage verlaufenden Bewegungen des vorderen Blockschiebers erzeugt.

Im Antriebsmodul der zweiten Transporteinheit kann eine mit einem Antriebsmotor gekoppelte Bewegungseinrichtung vorgesehen sein, die den vorderen Blockschieber in Längsrichtung der Anlage hin und her bewegt, und die Erzeugung der während des Konturschnitts in Längsrichtung der Anlage verlaufenden Bewegungen des vorderen Blockschiebers kann in das Steuerungsprogramm des Antriebsmotors integriert sein.

Im Antriebsmodul der zweiten Transporteinheit kann ein als Servomotor ausgebildeter Antriebsmotor und eine Bewegungseinrichtung vorgesehen sein, die als Kugelgewindespindeltrieb ausgebildet ist, der sich in Längsrichtung der Anlage erstreckt.

Die zweite Transporteinheit kann mit einem mit dem vorderen Blockschieber gekoppelten, den vorderen Blockschieber in Längsrichtung der Anlage hin und her bewegenden Linearmotor versehen sein, bei dem die Erzeugung der während des Konturschnittes in Längsrichtung der Anlage verlaufenden Bewegungen des vorderen Blockschiebers in das Steuerungsprogramm des Linearmotors integriert ist.

In weiterer Ausgestaltung der Erfindung kann folgendes vorgesehen sein.

Erfindungsgemäß kann eine die Blöcke der hinteren Auflageplatte der Hauptschneidestation in Querrichtung der Anlage zuführende Zuführeinrichtung vorgesehen sein.

Es kann eine die Blöcke in Querrichtung der Anlage zerschneidende, erste Schneidestation vorgesehen sein, in der die Blöcke in Querrichtung der Anlage durch eine stationär angeordnete Schneidvorrichtung geschoben werden. Die erste Schneidestation ist der Hauptschneidestation in Querrichtung der Anlage vorgelagert. Die in Querrichtung der Anlage aus der ersten Schneidestation austretenden Blöcke werden der Hauptschneidestation in Querrichtung der Anlage zugeführt.

Die erste Schneidestation kann mit einer Schneidvorrichtung versehen sein, die quer zur Bewegungsrichtung der Blöcke angeordnet ist und sich in Längsrichtung der Anlage erstreckt. Die Schneidvorrichtung kann zwei oder mehrere, in Längsrichtung der Anlage im Abstand von einander angeordnete Schneidwerkzeuge besitzen.

Bei der Schneidvorrichtung der ersten Schneidestation kann als Schneidwerkzeug eine stationär angeordnete Kreissäge vorgesehen sein, die ein um eine horizontale Achse rotierendes Kreissägeblatt besitzt.

Die Schneidvorrichtung der ersten Schneidestation kann mit einem stationär angeordneten Schneidrahmen versehen sein, der sich in Längsrichtung der Anlage erstreckt und zwei oder mehrere, im wesentlichen vertikal angeordnete Schneidedrähte enthält.

Die Schneidvorrichtung der ersten Schneidestation kann mit zwei in Längsrichtung der Anlage in einem größeren Abstand von einander angeordneten Schneidwerkzeugen versehen sein, die bei den die Schneidvorrichtung passierenden Blöcken nur die in Querrichtung der Anlage verlaufenden Ränder beschneiden, bzw. dort einen schmalen Randstreifen vom Block abschneiden.

Die Schneidvorrichtung der ersten Schneidestation kann mit mehreren, in Längsrichtung der Anlage in regelmäßigen Abständen angeordneten Schneidwerkzeugen versehen sein. Diese Schneidwerkzeuge zerschneiden die Blöcke in einzelne Leisten, die sich in Querrichtung der Anlage erstrecken und in Längsrichtung der Anlage hintereinander angeordnet sind.

Die erste Schneidestation kann mit einem in Querrichtung der Anlage verfahrbaren Blockschieber versehen sein, der die auf einer horizontalen Transportebene liegenden Blöcke in Querrichtung der Anlage durch die stationär angeordnete Schneidvorrichtung befördert.

Nachstehend wird die Erfindung anhand von einigen Ausführungsbeispielen näher erläutert.

In den angeschlossenen Zeichnungen sind einige Ausführungsbeispiel dargestellt. Die Zeichnungen zeigen:
- Fig. 1: zeigt eine erste Anlagenvariante im Längsschnitt
- Fig. 2: zeigt eine Draufsicht auf die Anlage von Fig. 1
- Fig. 3: zeigt ein erstes Detail der Anlage von Fig. 1 im Querschnitt
- Fig. 4: zeigt ein zweites Detail der Anlage von Fig. 1 im Querschnitt
- Fig. 5: zeigt eine zweite Anlagenvariante im Längsschnitt

- Fig. 6: zeigt eine dritte Anlagenvariante in Draufsicht
- Fig. 7: zeigt ein Detail der Anlage von Fig. 6 in Draufsicht
- Fig. 8: zeigt ein Detail der Anlage von Fig. 6 im Längsschnitt
- Fig. 9: zeigt ein Detail der Anlage von Fig. 6 im Querschnitt
- Fig. 10: zeigt ein Detail der Anlage von Fig. 6 im Querschnitt
- Fig. 11: zeigt eine vierte Anlagenvariante in Draufsicht
- Fig. 12: zeigt ein Detail der Anlage von Fig. 11 in Draufsicht
- Fig. 13: zeigt ein Detail der Anlage von Fig. 11 im Längsschnitt
- Fig. 14: zeigt ein Detail der Anlage von Fig. 11 im Querschnitt
- Fig. 15: zeigt ein Detail der Anlage von Fig. 11 im Querschnitt
- Fig. 16: zeigt die Anlage von Fig. 11 in einer 3-dimensionalen Darstellung
- Fig. 17: zeigt ein Detail der Anlage von Fig. 11 im Aufriss
- Fig. 18: zeigt ein Detail der Anlage von Fig. 11 im Aufriss
- Fig. 19: zeigt eine fünfte Anlagenvariante in Draufsicht
- Fig. 20: zeigt eine sechste Anlagenvariante in Draufsicht
- Fig. 21: zeigt eine siebente Anlagenvariante in Draufsicht
- Fig. 22: zeigt Details der Anlage von Fig. 21 in vergrößerter Darstellung
- Fig. 23: zeigt eine Variante der Hauptschneidestation in Draufsicht
- Fig. 24: zeigt eine Variante der Hauptschneidestation in Draufsicht
- Fig. 25: zeigt einen zerschnittenen Block in Draufsicht
- Fig. 26: zeigt einen zerschnittenen Block in Draufsicht
- Fig. 27: zeigt eine Variante der Konturschneidvorrichtung im Aufriss
- Fig. 28: zeigt eine Variante der Konturschneidvorrichtung im Aufriss
- Fig. 29: zeigt eine Variante einer Querschneidestation in Draufsicht
- Fig. 30: zeigt eine Variante einer Querschneidestation im Längsschnitt
- Fig. 31: zeigt eine Variante einer Querschneidestation im Längsschnitt, und
- Fig. 32: zeigt eine Variante der Hauptschneidestation im Längsschnitt

Die Erfindung sieht eine Anlage vor, in der flache Blöcke, wie z. B. Flach- oder Hohlwaffelblöcke, durch Konturschnitte zerschnitten werden. Durch die Konturschnitte werden aus den Blöcken Endprodukte herausgeschnitten, bei denen die Gestalt der Umrisse durch den Verlauf der Konturschnitte bestimmt wird. Der Verlauf der Konturschnitte ist zumindest in Abschnitten an die Umrisskontur der Endprodukte angepasst.

Die Konturschnitte werden von Schneidwerkzeugen ausgeführt, die in Querrichtung der Anlage hin und her bewegt werden, während die Blöcke in Längsrichtung der Anlage bewegt werden. Bei der Erzeugung der Konturschnitte werden die Querbewegungen der Schneidwerkzeuge mit den Längsbewegungen der Blöcke kombiniert. Die jeweilige Kombination der Querbewegungen der Schneidwerkzeuge mit den Längsbewegungen der Blöcke bestimmt den Verlauf der von den Schneidwerkzeugen in den Blöcken erzeugten Konturschnitte. Die Querbewegungen der Schneidwerkzeuge werden getrennt von den Längsbewegungen der Blöcke erzeugt. Die getrennte Erzeugung der beiden Bewegungen erlaubt die Herstellung von unterschiedlich gestalteten Konturschnitten. Es können Konturschnitte hergestellt werden, die geradlinige, kreisbogenförmige oder wellenförmige Teilstücke aufweisen. Es können Konturschnitte hergestellt werden, die an die Umrisskonturen von unterschiedlich gestalteten Endprodukten angepasst sind. Diese Endprodukte können z. B. die Gestalt eines Tortenstücks, einer Kreisscheibe, eines 3-blättrigen Kleeblatts, eines 4-blättrigen Kleeblatts aufweisen.

Die Konturschnitte werden in der Hauptschneidestation der Anlage ausgeführt. In der Hauptschneidestation ist eine geradlinige Transportbahn für die Blöcke vorgesehen. Die Transportbahn erstreckt sich in Längsrichtung der Anlage. Entlang der Transportbahn ist eine Hauptfördereinrichtung angeordnet. Diese befördert die Blöcke auf der Transportbahn in Längsrichtung der Anlage. Quer zur Transportbahn ist eine Konturschneidvorrichtung angeordnet. Diese sieht zumindest ein Konturschneidmodul vor, das zumindest ein in Querrichtung der Anlage verfahrbares Schneidwerkzeug besitzt.

Die Blöcke werden von der Hauptfördereinrichtung längs der Transportbahn durch die Konturschneidvorrichtung geschoben. Beim Passieren der Konturschneidvorrichtung werden die Blöcke durch das vom Konturschneidmodul in Querrichtung der Anlage hin und her bewegte Schneidwerkzeug zerschnitten. Das in Querrichtung der Anlage hin und her bewegte Schneidwerkzeug erzeugt in einem sich in Längsrichtung der Anlage bewegenden Block einen Schnitt bzw. Konturschnitt, der einen Verlauf aufweist, der durch die Kombination der Querbewegungen des Schneidwerkzeugs mit den Längsbewegungen des Blocks entstanden ist.

Die Blöcke werden der Anlage an der Eingabestation zugeführt und innerhalb der Anlage zur Hauptschneidestation befördert. In der Hauptschneidestation werden die Blöcke in Endprodukte und allfällige Schneidreste zerteilt. Die Endprodukte und Schneidreste werden zur Ausgabestation der Anlage befördert und dort aus der Anlage ausgegeben.

Die Anlage ist für das Verarbeiten von Waffelblöcken vorgesehen. Waffelblöcke sind rechteckige, formstabile, plattenähnliche Gebilde mit einem Sandwichaufbau, in dem Waffelblätter und Cremeschichten abwechselnd übereinander angeordnet sind. Die oberste Lage das Sandwichaufbaus kann ein Waffelblatt oder eine Cremeschicht sein. Die Waffelblätter sind ebene, oder abschnittsweise ebene gebackene Waffelblätter, die an Ober- und Unterseite mit einem Waffelmuster versehen sind und eine knusprigspröde Konsistenz aufweisen. Die Cremeschichten enthalten zumeist eine mit Luft aufgeschlagene Creme. Statt der Cremeschichten können auch andere Füllmasseschichten in den Waffelblöcken enthalten sein. Bei Hohlwaffelblöcken können die Waffelblätter oder das jeweils außen liegende Waffelblatt abschnittsweise aus der Ebene des Waffelblattes herausgewölbt sein, wodurch z.B. cremegefüllte Hohlwaffeln herstellbar sind.

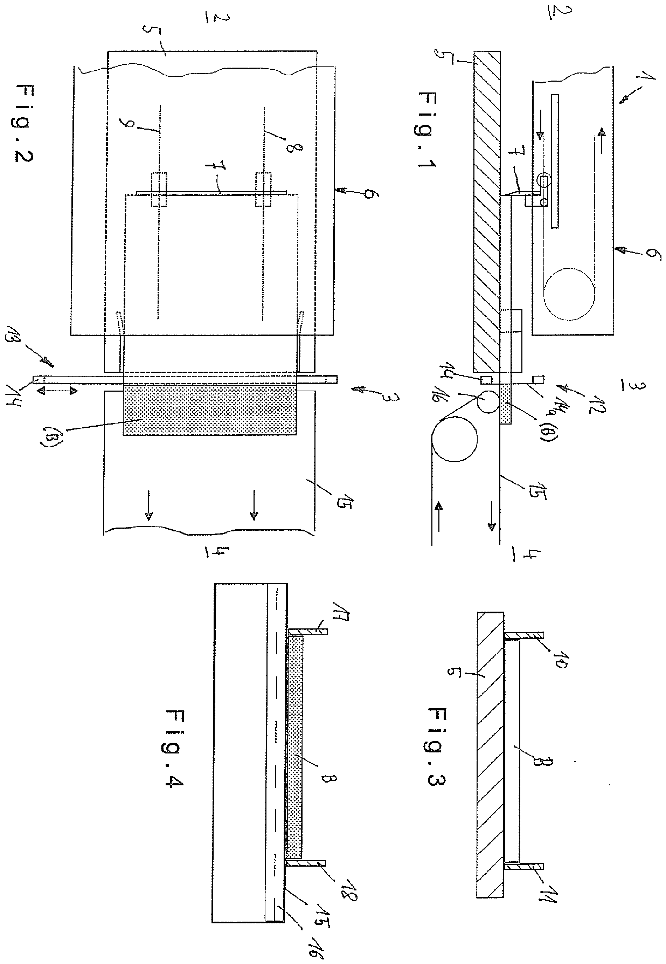

Die Fig. 1 und 2 zeigen schematisch eine erfindungsgemäße Anlage 1 in In-Line-Ausführung. Die Anlage 1 sieht eine geradlinige Transportbahn vor. Längs dieser sind eine Eingabestation 2, eine Hauptschneidestation 3 und eine Ausgabestation 4 in einer Linie hintereinander angeordnet. Die Eingabestation 2 und die Ausgabestation 4 sind in Fig. 1 und 2 nur schematisch dargestellt.

In der Anlage 1 ist eine horizontale Auflageplatte 5 vorgesehen, die an der Unterseite der Transportbahn angeordnet ist und sich von der Eingabestation 2 bis in die Hauptschneidestation 3 erstreckt. In der Anlage 1 ist eine Hauptfördereinrichtung 6 vorgesehen, die oberhalb der Auflageplatte 5 angeordnet ist und sich längs der Transportbahn von der Eingabestation 2 bis in die Hauptschneidestation 3 erstreckt. Die Hauptfördereinrichtung 6 befördert die auf der Auflageplatte 5 liegenden Blöcke von der Eingabestation 2 bis in die Hauptschneidestation 3.

Die Hauptfördereinrichtung 6 ist mit quer zur Längsrichtung der Anlage angeordneten Druckplatten 7 versehen. Die Druckplatten 7 sind an zwei, sich in Längsrichtung der Anlage erstreckenden, endlosen Ketten 8, 9 befestigt, bei denen jeweils das horizontale, untere Kettentrum über der Auflageplatte 5 angeordnet ist. Die Druckplatten 7 sind jeweils um eine horizontale Achse aus einer schrägen Ruhestellung in eine vertikale Arbeitsstellung verschwenkbar. Die in ihre vertikale Arbeitsstellung verschwenkten Druckplatten 7 werden von den unteren Kettentrumen der beiden endlosen Ketten 8, 9 in Längsrichtung der Anlage vorwärts bewegt. Dabei erfasst jede Druckplatte 7 einen auf der Auflageplatte 5 liegenden Block (B) an der hinteren Stirnseite und schiebt den Block (B) zum vorderen Ende der Auflageplatte 5.

Beim vorderen Ende der Auflageplatte 5 sind die Transportbahn seitlich begrenzende Führungsleisten 10, 11 über der Auflageplatte 5 angeordnet. Fig. 3 zeigt einen auf der Auflageplatte 5 zwischen den beiden Führungsleisten 10, 11 liegenden Block (B).

In der Hauptschneidestation 3 ist eine Konturschneidvorrichtung 12 vorgesehen, die quer zur Transportbahn angeordnet ist. Die Konturschneidvorrichtung 12 ist nach der Auflageplatte 5 angeordnet. Sie sieht ein Konturschneidmodul 13 vor, das einen in Querrichtung der Anlage verfahrbaren Konturschneidrahmen 14 besitzt, der zumindest einen vertikal angeordneten Schneiddraht 14a enthält. Der Konturschneidrahmen 14 wird vom Konturschneidmodul 13 in Querrichtung der Anlage hin und her bewegt, während ein Block von der Hauptfördereinrichtung 6 in Längsrichtung der Anlage durch die Konturschneidvorrichtung 12 befördert wird. Der Schneiddraht 14a erzeugt in dem sich vorwärts bewegenden Block einen Konturschnitt, bei dem die Längsbewegungen des Blocks mit den Querbewegungen des Konturschneidrahmens 14 kombiniert werden. Die Kombination der beiden Bewegungen bestimmt den Verlauf des vom Schneiddraht 14a erzeugten Konturschnitts.

Die Blöcke (B) werden beim Passieren der Konturschneidvorrichtung 12 durch die vom Schneiddraht 14a des Konturschneidmoduls 13 erzeugten Konturschnitte zerteilt. Dabei entstehen die gewünschten Endprodukte und allfällige Schneidreste. Beide treten an der Vorderseite der Konturschneidvorrichtung 12 aus. Die Endprodukte besitzen einen durch die Konturschnitten erzeugten Umriss.

Der Konturschneidvorrichtung 12 ist ein endloses Förderband 15 nachgeordnet, das die Endprodukte aufnimmt und aus der Anlage 1 abtransportiert. Das Förderband 15 erstreckt sich längs der Transportbahn bis in die Ausgabestation 4. Das Förderband 15 besitzt ein unmittelbar nach der Konturschneidvorrichtung 12 angeordnetes, hinteres Ende, das mit einer Messerkantenumlenkung versehen ist, die von einer dünnen Umlenkrolle 16 gebildet wird. Beim hinteren Ende des Förderbandes 15 sind über dem Förderband 15 die Transportbahn seitlich begrenzende Führungsleisten 17, 18 angeordnet. Fig. 4 zeigt einen auf dem Förderband 15 zwischen den Führungsleisten 17, 18 liegenden Block. Der Block hat die Konturschneidvorrichtung 12 passiert und ist bereits zerschnitten.

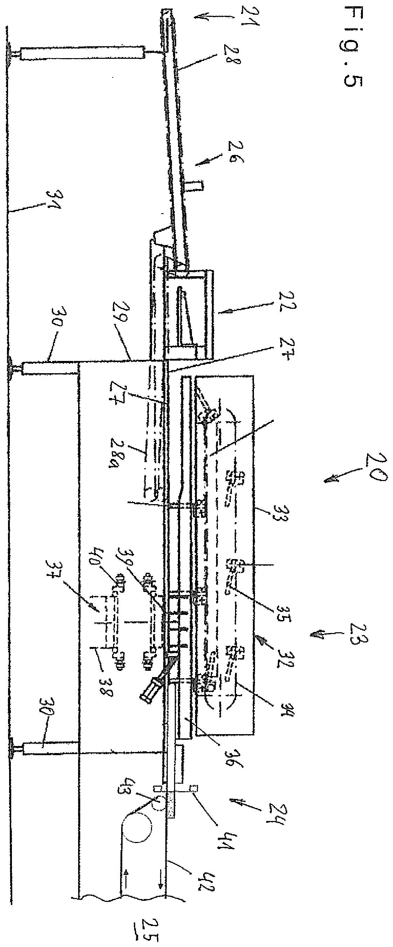

Fig. 5 zeigt eine weitere erfindungsgemäße Anlage 20 in In-Line-Ausführung. Diese umfasst eine Eingabestation 21, eine Stapelstation 22, eine erste Schneidestation 23, eine Hauptschneidestation 24 und eine Ausgabestation 25. Die Stationen sind in Längsrichtung der Anlage in einer Linie hintereinander angeordnet.

Die Blöcke werden der Anlage 20 in der Eingabestation 21 zugeführt. Eine Zufuhreinrichtung 26 erstreckt sich in Längsrichtung der Anlage von der Eingabestation 21 durch die Stapelstation 22 bis zu einer horizontalen Auflageplatte 27, die sich in Längsrichtung der Anlage durch die erste Schneidestation 23 bis in die Hauptschneidestation 24 erstreckt. Die Zufuhreinrichtung 26 besitzt nebeneinander angeordnete Transportriemen 28, die sich in Längsrichtung der Anlage von der Eingabestation 21 durch die Stapelstation 22 bis zur horizontalen Auflageplatte 27 erstrecken. Die Auflageplatte 27 ist an der Oberseite eines Maschinengestells 29 angebracht, das sich über Füße 30 am Boden 31 abstützt. Die Auflageplatte 27 ist in der hinteren Hälfte mit Längsschlitzen versehen, in denen die vorderen Endabschnitte 28a der Transportriemen 28 aufgenommen sind. Die Zufuhreinrichtung 26 befördert die Blöcke von der Eingabestation 21 durch die Stapelstation 22 zur Auflageplatte 27. Auf der hinteren Hälfte der Auflageplatte 27 werden die Blöcke durch Absenken der vorderen Endabschnitte 28a der Transportriemen 28 abgelegt.

In der Stapelstation 23 können zwei oder drei Blöcke zu einem Block-Stapel übereinander gestapelt werden. Der Block-Stapel wird auf den Transportriemen 28 abgelegt. Auf den Transportriemen 28 liegen die Blöcke bzw. Block-Stapel mit Abstand hintereinander. Die Blöcke bzw. Block-Stapel werden von den Transportriemen 28 der Zufuhreinrichtung 26 zur Auflageplatte 27 befördert und auf der hinteren Hälfte der Auflageplatte 27 abgelegt.

Die Anlage 20 besitzt eine Hauptfördereinrichtung 32, die über der Auflageplatte 27 angeordnet ist und sich in Längsrichtung der Anlage bis in die Hauptschneidestation 24 erstreckt. Im Tragrahmen 33 der Hauptfördereinrichtung 32 sind zwei endlose Transportketten 34 nebeneinander angeordnet, bei denen die horizontalen, unteren Kettentrume über der Auflageplatte 27 angeordnet sind. An den Transportketten 34 sind quer zur Längsrichtung der Anlage angeordnete Druckplatten 35 angebracht. Die Druckplatten 35 sind mit Abstand hintereinander angeordnet und aus einer schrägen Ruhestellung in eine vertikale Arbeitsstellung verschwenkbar. Die Transportketten 34 befördern die in ihre vertikale Arbeitsstellung verschwenkten Druckplatten 35 entlang der Oberseite der Auflageplatte 27 in Längsrichtung der Anlage nach vorne. Jede Druckplatte 35 erfasst einen auf der Auflageplatte 27 liegenden Block bzw. Block-Stapel an der hinteren Stirnseite und schiebt diesen in Längsrichtung der Anlage vorwärts zum vorderen Ende der Auflageplatte 27.

Unter dem Tragrahmen 33 der Hauptfördereinrichtung 32 ist ein langgestreckter Balken 36 angeordnet, der sich in Längsrichtung der Anlage bis in die Hauptschneidestation 24 erstreckt. Der Balken 36 dient als Niederhalter für die auf der Auflageplatte 27 liegenden Blöcke bzw. Block-Stapel. Der Abstand des Balkens 36 von der Auflageplatte 27 ist verstellbar. Der Balken 36 verhindert ein Aufkippen der auf der Auflageplatte 27 liegenden Blöcke bzw. Block-Stapel, während diese von der Hauptfördereinrichtung 32 auf der Auflageplatte 27 vorwärts geschoben werden.

Die erste Schneidestation 23 der Anlage 20 ist im Bereich der vorderen Hälfte der Auflageplatte 27 angeordnet. Die erste Schneidestation 23 sieht eine unterhalb der Auflageplatte 27 angeordnete Schneidvorrichtung 37 vor, die in Querrichtung der Anlage umlaufende Schneidmesser 38 besitzt, die beim Schneidvorgang durch in der Auflageplatte 27 angeordnete Querschlitze 39 hindurch nach oben vorstehen und die auf der Auflageplatte 27 liegenden Blöcke bzw. Block-Stapel zerschneiden. Die Schneidmesser 38 sind an zwei endlosen Ketten 40 befestigt, die in Querrichtung der Anlage umlaufen. Die Schneidmesser 38 werden von den umlaufenden Ketten 40 vor dem Schneidvorgang durch die Querschlitze 39 hindurch über die Auflageplatte 28 angehoben und nach dem Schneidvorgang unter die Auflageplatte 28 abgesenkt. Die Schneidmesser 38 erzeugen in den auf der Auflageplatte 27 liegenden Blöcken bzw. Block-Stapel gerade Schnitte, die sich in Querrichtung der Anlage erstrecken. Die geraden Schnitte zerschneiden die Blöcke bzw. Block-Stapel in Leisten bzw. Leisten-Stapel, die in Längsrichtung der Anlage hintereinander angeordnet sind.

Die Hauptschneidestation 24 ist der ersten Schneidestation 23 nachgeordnet. In der Hauptschneidestation 24 ist eine Konturschneidvorrichtung 41 vorgesehen, die mit den von ihr erzeugten Konturschnitten die Leisten bzw. Leisten-Stapel zerschneidet, während diese von der Hauptfördereinrichtung 32 in Längsrichtung der Anlage durch die Konturschneidvorrichtung 41 geschoben werden. Die Konturschneidvorrichtung 41 ist quer zur Transportbahn angeordnet. Sie sieht ein Konturschneidmodul vor, bei dem zumindest ein vertikal angeordneter Schneiddraht in einem in Querrichtung der Anlage verfahrbaren Konturschneidrahmen angeordnet ist, der vom Konturschneidmodul zum Erzeugen der Konturschnitte in Querrichtung der Anlage hin und her bewegt wird. Die Konturschnitte zerschneiden die Leisten bzw. Leisten-Stapel in die Endprodukte. Die Endprodukte treten an der Vorderseite der Konturschneidvorrichtung 41 aus. Der Konturschneidvorrichtung 41 ist ein Förderband 42 nachgeordnet, das die Endprodukte aus der Anlage 20 abtransportiert. Das Förderband 42 erstreckt sich bis in die Ausgabestation 25. Es besitzt ein unmittelbar nach der Konturschneidvorrichtung 41 angeordnetes, hinteres Ende, das mit einer Messerkantenumlenkung versehen ist, die von einer dünnen Umlenkrolle 43 gebildet wird. Die Hauptschneidestation 24 entspricht im Wesentlichen der Hauptschneidestation 3 der Anlage 1 von Fig. 1 und 2.

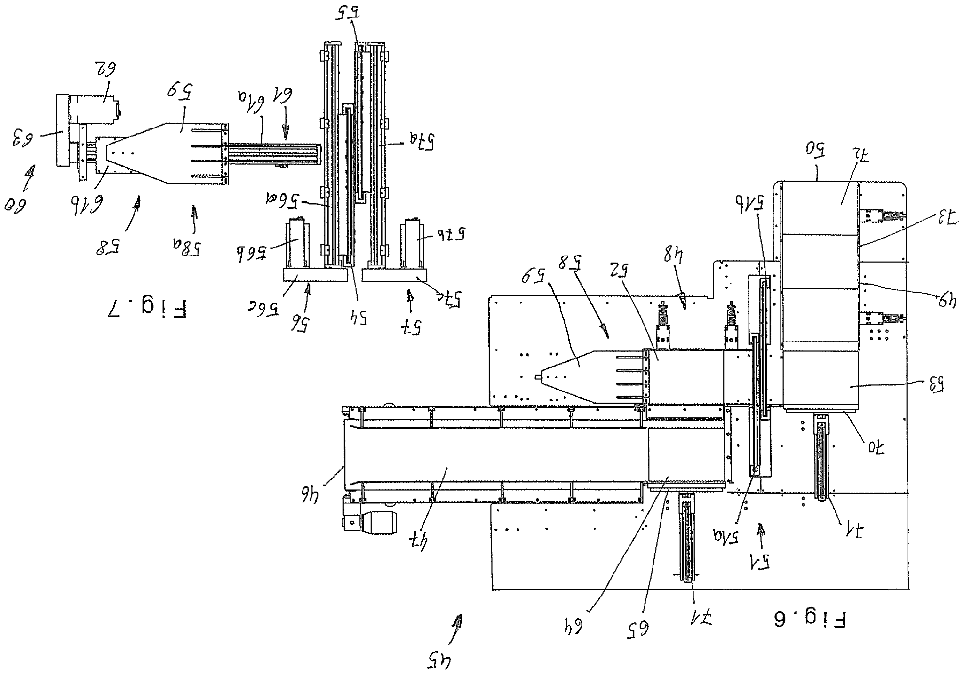

Die Fig. 6 bis 10 zeigen eine weitere erfindungsgemäße Anlage 45. Die Fig. 6 zeigt die Anlage 45 in Draufsicht.

Die Anlage 45 sieht eine Eingabestation 46 vor, an die ein sich in Längsrichtung der Anlage erstreckendes Transportband 47 anschließt, das die Blöcke ins Innere der

Anlage 45 befördert. Im Inneren der Anlage 45 ist eine Hauptschneidestation 48 vorgesehen, in der die Blöcke zerschnitten und die Endprodukte hergestellt werden. Die Endprodukte werden an eine Ausgabeeinrichtung 49 übergeben. Die Ausgabeeinrichtung 49 erstreckt sich in Querrichtung der Anlage von der Hauptschneidestation 48 bis zur Ausgabestation 50. Die Ausgabestation 50 ist an dem in Fig. 6 vorderen Rand der Anlage 45 angeordnet.

Die Hauptschneidestation 48 sieht eine geradlinige Transportbahn für die Blöcke vor. Die Transportbahn erstreckt sich in Längsrichtung der Anlage. An der Transportbahn ist eine die Blöcke durch Konturschnitte zerschneidende Konturschneidvorrichtung 51 angeordnet. Die Konturschneidvorrichtung 51 ist quer zur Transportbahn der Blöcke angeordnet. Der Konturschneidvorrichtung 51 ist eine hintere Auflageplatte 52 in Längsrichtung der Anlage vorgelagert und eine vordere Auflageplatte 53 in Längsrichtung der Anlage nachgeordnet.

Die Konturschneidvorrichtung 51 umfasst zwei in Längsrichtung der Anlage hintereinander angeordnete Konturschneidmodule 51a, 51b mit in Querrichtung der Anlage verschiebbaren Konturschneidrahmen 54, 55. Das hintere Konturschneidmodul 51a ist der Vorderkante der hintere Auflageplatte 52 benachbart angeordnet und sieht einen hinteren Konturschneidrahmen 54 vor, der nahe der Rückseite der Konturschneidvorrichtung 51 angeordnet ist. Das vordere Konturschneidmodul 51b ist der Hinterkante der vorderen Auflageplatte 53 benachbart angeordnet und sieht einen vorderen Konturschneidrahmen 55 vor, der nahe der Vorderseite der Konturschneidvorrichtung 51 angeordnet ist. In beiden Konturschneidmodulen 51a, 51b ist der Konturschneidrahmen 54, 55 mit einem Antriebsmodul 56, 57 verbunden, das den Konturschneidrahmen 54, 55 in Querrichtung der Anlage hin und her bewegt. Das Antriebsmodul 56, 57 enthält eine Bewegungseinrichtung, die mit einem Antriebsmotor gekoppelt ist und den Konturschneidrahmen 54, 55 in Querrichtung der Anlage hin und her bewegt. Fig. 7 zeigt eine Ausführungsform der Antriebsmodule 56, 57.

Beim hinteren Konturschneidmodul 51a ist der hintere Konturschneidrahmen 54 mit einem unterhalb von ihm angeordneten Antriebsmodul 56 verbunden. Das Antriebsmodul 56 sieht einen horizontalen, sich in Querrichtung der Anlage erstreckenden Kugelgewindespindeltrieb 56a vor, bei dem die Kugelgewindespindelmutter mit dem hinteren Konturschneidrahmen 54 starr verbunden ist. Die Kugelgewindespindel wird von einem Antriebsmotor 56b über einen Zahnriementrieb 56c angetrieben. Die Kugelgewindespindel wird vom Antriebsmotor 56b im Uhrzeigersinn oder im Gegenuhrzeigersinn gedreht, um den hinteren Konturschneidrahmen 54 in Querrichtung der Anlage von links nach rechts bzw. von rechts nach links zu verschieben.

Beim hinteren Konturschneidmodul 51a kann unterhalb vom hinteren Konturschneidrahmen 54 auch ein in Querrichtung der Anlage angeordneter Kettentrieb vorgesehen sein, bei dem die in Querrichtung der Anlage umlaufende, endlose Kette mit dem hinteren Konturschneidrahmen 54 mechanisch gekoppelt ist. Der Kettentrieb wird von einem Antriebsmotor angetrieben. Die endlose Kette des Kettentriebs wird in Querrichtung der Anlage vorwärts und rückwärts bewegt, um den hinteren Konturschneidrahmen 54 in Querrichtung der Anlage von links nach rechts bzw. von rechts nach links zu bewegen.

Beim vorderen Konturschneidmodul 51b ist der vordere Konturschneidrahmen 55 mit einem unterhalb von ihm angeordneten Antriebsmodul 57 verbunden. Das Antriebsmodul 57 sieht einen horizontalen, sich in Querrichtung der Anlage erstreckenden Kugelgewindespindeltrieb 57a vor, bei dem die Kugelgewindespindelmutter mit dem vorderen Konturschneidrahmen 55 starr verbunden ist. Die Kugelgewindespindel wird von einem Antriebsmotor 57b über einen Zahnriementrieb 57c angetrieben. Die Kugelgewindespindel wird vom Antriebsmotor 57b im Uhrzeigersinn oder im Gegenuhrzeigersinn gedreht, um den vorderen Konturschneidrahmen 55 in Querrichtung der Anlage von links nach rechts bzw. von rechts nach links zu verschieben.

Beim vorderen Konturschneidmodul 51b kann unterhalb vom vorderen Konturschneidrahmen 55 auch ein in Querrichtung der Anlage angeordneter Kettentrieb vorgesehen sein, bei dem die in Querrichtung der Anlage umlaufende, endlose Kette mit dem vorderen Konturschneidrahmen 55 mechanisch gekoppelt ist. Der Kettentrieb wird von einem Antriebsmotor angetrieben. Die endlose Kette des Kettentriebs wird in Querrichtung der Anlage vorwärts und rückwärts bewegt, um den vorderen Konturschneidrahmen 55 in Querrichtung der Anlage von links nach rechts bzw. von rechts nach links zu bewegen.

In der Hauptschneidestation 48 ist eine Hauptfördereinrichtung 58 für die Blöcke vorgesehen. Die Hauptfördereinrichtung sieht eine der Konturschneidvorrichtung 51 vorgelagerte Transporteinheit 58a vor. Die Transporteinheit 58a ist mit einem hinteren Blockschieber 59 versehen, der längs der Transportbahn der Blöcke in Längsrichtung der Anlage verschiebbar ist. Der Blockschieber 59 ist längs der Transportbahn der Blöcke aus einer hinteren Endstellung in eine vordere Endstellung verschiebbar. In der hinteren Endstellung ist der Blockschieber 59 der hinteren Auflageplatte 52 vorgelagert. Der Blockschieber 59 wird von der Transporteinheit 58a aus der hinteren Endstellung über die hintere Auflageplatte 52 hinweg nach vorne in die vordere Endstellung geschoben. Dadurch wird ein auf der hinteren Auflageplatte 52 liegender Block längs der Transportbahn der Blöcke in Längsrichtung der Anlage nach vorne geschoben. Der Block wird längs der Transportbahn der Blöcke durch die Konturschneidvorrichtung 51 hindurch auf die vordere Auflageplatte 53 geschoben.

Der Blockschieber 59 der Transporteinheit 58a ist mit einem die Längsbewegungen des Blockschiebers 59 erzeugenden Antriebsmodul 60 verbunden. Das Antriebsmodul 60 ist unterhalb der Transportbahn der Blöcke angeordnet. Das Antriebsmodul 60 sieht einen horizontalen, sich in Längsrichtung der Anlage erstreckenden Kugelgewindespindeltrieb 61 vor. Der Kugelgewindespindeltrieb 61 umfasst eine Kugelgewindespindel 61a und eine Kugelgewindespindelmutter 61b. Der Blockschieber 59 der Transporteinheit 58a ist mit der Kugelgewindespindelmutter 61b starr verbunden. Die Kugelgewindespindel 61a wird am hinteren Ende von einem Antriebsmotor 62 angetrieben, der mit der Kugelgewindespindel 61a über einen Zahnriementrieb 63 gekoppelt ist. Die Kugelgewindespindel 61a wird vom Antriebsmotor 62 im Uhrzeigersinn oder im Gegenuhrzeigersinn gedreht, um den Blockschieber 59 in Längsrichtung der Anlage vorwärts bzw. rückwärts zu bewegen.

Der Blockschieber 59 der Transporteinheit 58a kann auch auf einem Schlitten befestigt sein, der auf in Längsrichtung der Anlage verlaufenden Schienen sitzt und entlang diesen Schienen in Längsrichtung der Anlage verschiebbar ist. Als Antriebsmodul für den Blockschieber 59 kann ein Kettentrieb vorgesehen sein, der in Längsrichtung der Anlage angeordnet ist und eine in Längsrichtung der Anlage umlaufende, endlose Kette besitzt, die mit dem Schlitten mechanisch gekoppelt ist. Der Kettentrieb wird von einem Antriebsmotor angetrieben. Die endlose Kette des Kettentriebs wird in Längsrichtung der Anlage vorwärts und rückwärts bewegt, um den Blockschieber 59 der Transporteinheit 58 in Längsrichtung der Anlage vorwärts bzw. rückwärts zu bewegen.

Der Anlage 45 werden die Blöcke an der Eingabestation 46 zugeführt und dort auf dem Transportband 47 abgelegt.

Das Transportband 47 befördert die Blöcke ins Innere der Anlage 45. Am vorderen Ende des Transportbandes 47 ist eine Auflageplatte 64 für die Blöcke angeordnet. Der Auflageplatte 64 ist ein Querschieber 65 zugeordnet. Der Querschieber 65 ist entlang der Auflageplatte 64 in Querrichtung der Anlage verschiebbar. Der Querschieber 65 wird von einem Arbeitszylinder 71 in Querrichtung der Anlage hin und her bewegt.

Die auf der Auflageplatte 64 liegenden Blöcke werden durch den Querschieber 65 in Querrichtung der Anlage auf die hintere Auflageplatte 52 der Hauptschneidestation 48 geschoben.

In der Hauptschneidestation 48 werden die Blöcke durch den Blockschieber 59 der Transporteinheit 58a längs der Transportbahn der Blöcke in Längsrichtung der Anlage durch die Konturschneidvorrichtung 51 geschoben. Die Blöcke passieren die beiden Konturschneidmodule der Konturschneidvorrichtung 51, während bei diesen die Konturschneidrahmen 54, 55 durch die Antriebsmodule 56, 57 in Querrichtung der Anlage hin und her bewegt werden. Das hintere Konturschneidmodul 51a erzeugt mit dem hinteren Konturschneidrahmen 54 eine erste Schar von Konturschnitten, bei denen der Verlauf durch die Kombination der Längsbewegungen der Blöcke mit den Querbewegungen des hinteren Konturschneidrahmens 54 entsteht. Das vordere Konturschneidmodul 51b erzeugt mit dem vorderen Konturschneidrahmen 55 eine zweite Schar von Konturschnitten, bei denen der Verlauf durch die Kombination der Längsbewegungen der Blöcke mit den Querbewegungen des vorderen Konturschneidrahmens 55 entsteht. Die beiden Scharen von Konturschnitten enthalten einander gegenüberliegende Teilabschnitte, die einander zu einem vollständigen Umriss der herzustellenden Endprodukte ergänzen.

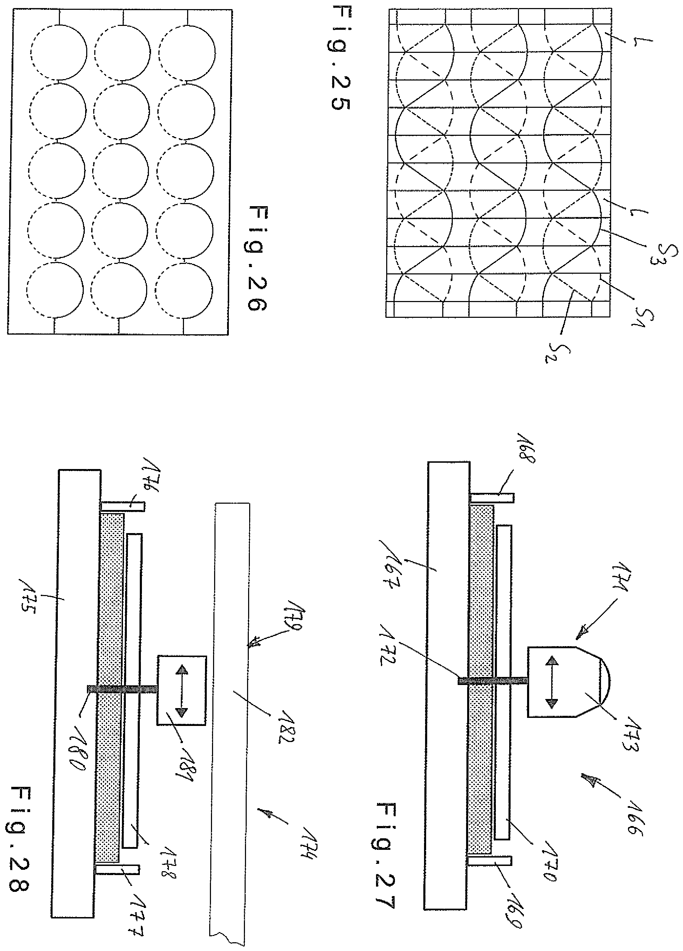

Fig. 26 zeigt ein Beispiel für einen durch zwei Scharen von Konturschnitten zerschnittenen, rechteckigen Block, bei dem die einander gegenüberliegenden Teilabschnitte der beiden Scharen von Konturschnitten einander zu vollständigen Kreisen ergänzen. Die eine Schar von Konturschnitten ist in voll ausgezogenen Linien dargestellt, die zweite Schar von Konturschnitten ist in strichlierten Linien dargestellt. Der Block enthält 15 Stück, als Kreisscheiben ausgebildete Endprodukte, die im Block in 3 Längsreihen angeordnet sind. Der Block enthält die beim Zerschneiden des Blocks übriggebliebenen Reste, das sind die beiden Randleisten und die beiden zwischen den 3 Längsreihen der Endprodukte angeordneten Reststücke.

Beim Passieren der beiden Konturschneidmodule werden die Blöcke durch die von den Konturschneidmodulen erzeugten beiden Scharen von Konturschnitten in Endprodukte und Blockreste zerschnitten. Die Endprodukte und Blockreste treten an der Vorderseite der Konturschneidvorrichtung 51 in Längsrichtung der Anlage 45 aus und werden von der vorderen Auflageplatte 53 der Hauptschneidestation 48 aufgenommen.

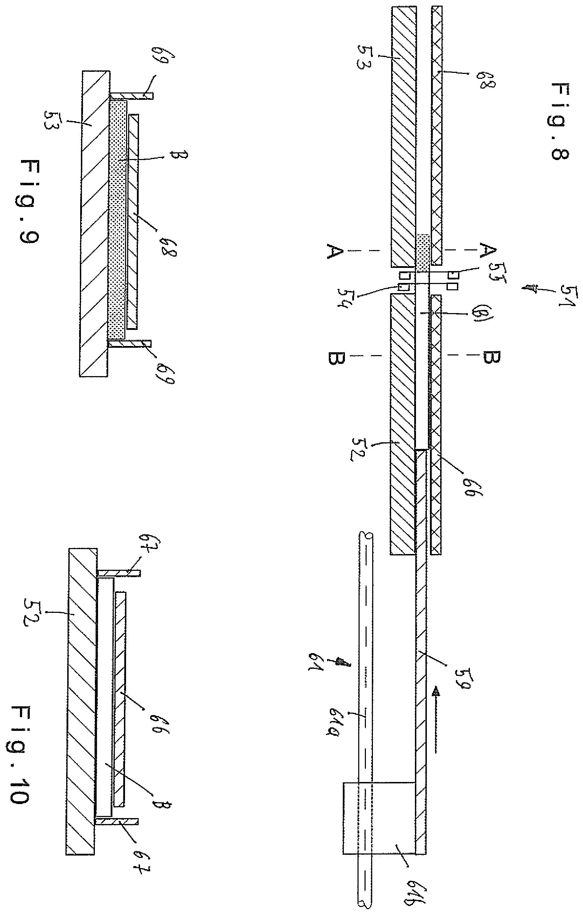

Fig. 8 zeigt einen Längsschnitt durch die Hauptschneidestation 48. Fig. 8 zeigt einen Block (B) beim Passieren der Konturschneidvorrichtung 51. Der Block (B) liegt auf der hinteren Auflageplatte 52 der Hauptschneidestation 48. Der Block wird vom Blockschieber 59 der Transporteinheit 58a in Längsrichtung der Anlage durch die Konturschneidvorrichtung 51 geschoben. Ein vorderer Abschnitt des Blocks (B) hat bereits die Konturschneidrahmen 54, 55 der beiden Konturschneidmodule 51a, 51b passiert und liegt auf der vorderen Auflageplatte 53 der Hauptschneidestation 48.

In der Hauptschneidestation 48 ist über der hinteren Auflageplatte 52 eine obere Platte 66 angeordnet. Diese dient als Niederhalter für die auf der hinteren Auflageplatte 52 liegenden Blöcke. Der Abstand der oberen Platte 66 von der hinteren Auflageplatte 52 ist verstellbar. Die obere Platte 66 verhindert ein Aufkippen der auf der hinteren Auflageplatte 52 liegenden Blöcke, während diese vom Blockschieber 59 der Transporteinheit 58 durch die Konturschneidvorrichtung 51 geschoben werden.

Über der hinteren Auflageplatte 52 sind die Transportbahn der Blöcke seitlich begrenzende Führungsleisten 67 angeordnet. Fig. 10 zeigt einen auf der hinteren Auflageplatte 52 zwischen den beiden Führungsleisten 67 liegenden Block in einem vertikalen Schnitt gemäß der Linie B-B in Fig. 8.

In der Hauptschneidestation 48 ist über der vorderen Auflageplatte 53 eine obere Platte 68 angeordnet. Diese dient als Niederhalter für die aus der Konturschneidvorrichtung 51 austretenden, zerschnittenen Blöcke. Der Abstand der oberen Platte 68 von der vorderen Auflageplatte 53 ist verstellbar. Die obere Platte 68 verhindert ein Aufkippen der aus der Konturschneidvorrichtung 51 austretenden, zerschnittenen Blöcke.

Über der vorderen Auflageplatte 53 sind die Transportbahn der Blöcke seitlich begrenzende Führungsleisten 69 angeordnet. Fig. 9 zeigt einen auf der vorderen Auflageplatte 53 zwischen den beiden Führungsleisten 69 liegenden, zerschnittenen Block in einem vertikalen Schnitt gemäß der Linie A-A in Fig. 8.

In der Hauptschneidestation 48 ist bei der vorderen Auflageplatte 53 ein Querschieber 70 vorgesehen, der die von der vorderen Auflageplatte 53 aufgenommenen Endprodukte und Blockreste in Querrichtung der Anlage aus der Hauptschneidestation 48 hinausschiebt. Der Querschieber 70 wird von einem Arbeitszylinder 71 entlang der vorderen Auflageplatte 53 in Querrichtung der Anlage hin und her bewegt. An die vordere Auflageplatte 53 der Hauptschneidestation 48 schließt in Querrichtung der Anlage die Ausgabeeinrichtung 49 an, die sich bis in die Ausgabestation 50 erstreckt. In der Ausgabeeinrichtung 49 ist eine horizontale Auflageplatte 72 für die zerschnittenen Blöcke vorgesehen. Der Querschieber 70 schiebt einen zerschnittenen Block nach dem anderen auf die Auflageplatte 72. Jeder zerschnittene Block schiebt den vor ihm auf der Auflageplatte 72 liegenden, zerschnittenen Block in Querrichtung der Anlage weiter. Entlang der Auflageplatte 72 sind seitliche Führungsleisten 73 angeordnet, an denen die zerschnittenen Blöcke entlang gleiten. An Stelle der Auflageplatte 72 kann ein Transportband vorgesehen sein, das sich in Querrichtung der Anlage erstreckt und die zerschnittenen Blöcke zur Ausgabestation 50 befördert.

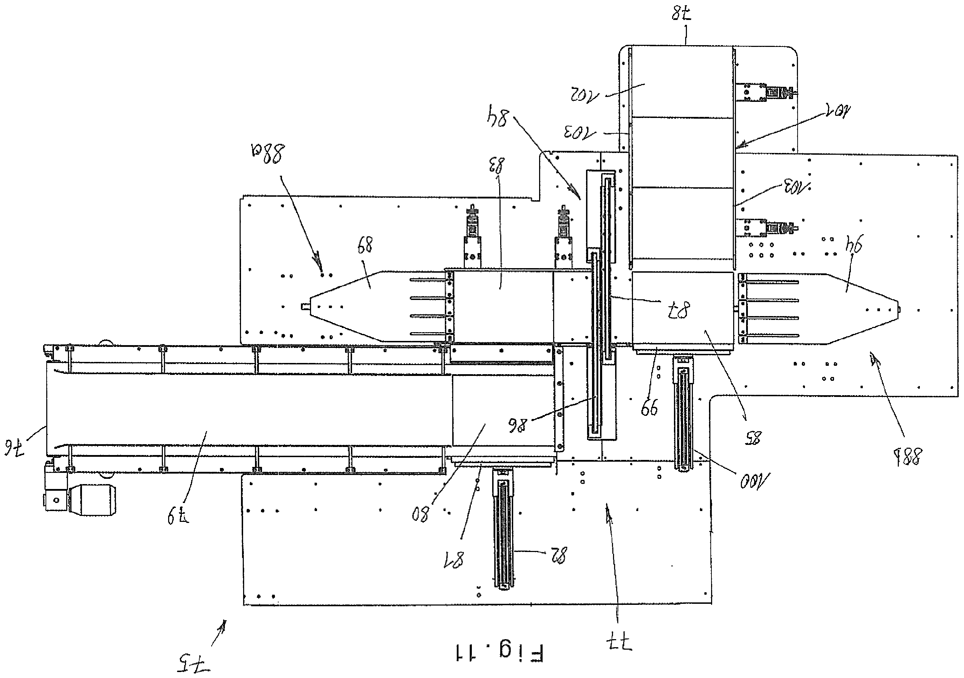

Die Fig. 11-18 zeigen eine weitere erfindungsgemäße Anlage 75. Die Fig. 11 zeigt die Anlage 75 in Draufsicht. Die Anlage 75 umfasst eine Eingabestation 76, eine Hauptschneidestation 77 und eine Ausgabestation 78. Die Eingabestation 76 ist an dem in Fig. 11 rechten Rand der Anlage 75 angeordnet. Die Hauptschneidestation 77 ist im Inneren der Anlage 75 angeordnet. Die Ausgabestation 78 ist an dem in Fig. 11 vorderen Rand der Anlage 75 angeordnet.

Von der Eingabestation 76 führt ein in Längsrichtung der Anlage verlaufendes Transportband 79 ins Innere der Anlage 75. Am vorderen Ende des Transportbandes 79 ist eine Auflageplatte 80 für die Blöcke angeordnet. Der Auflageplatte 80 ist ein Querschieber 81 zugeordnet. Der Querschieber 81 ist entlang der Auflageplatte 80 in Querrichtung der Anlage verschiebbar. Der Querschieber 81 wird von einem Arbeitszylinder 82 in Querrichtung der Anlage hin und her bewegt.

Die Blöcke werden vom Transportband 79 in Längsrichtung der Anlage zur Auflageplatte 80 befördert und vom Querschieber 81 in Querrichtung der Anlage der Hauptschneidestation 77 zugeführt.

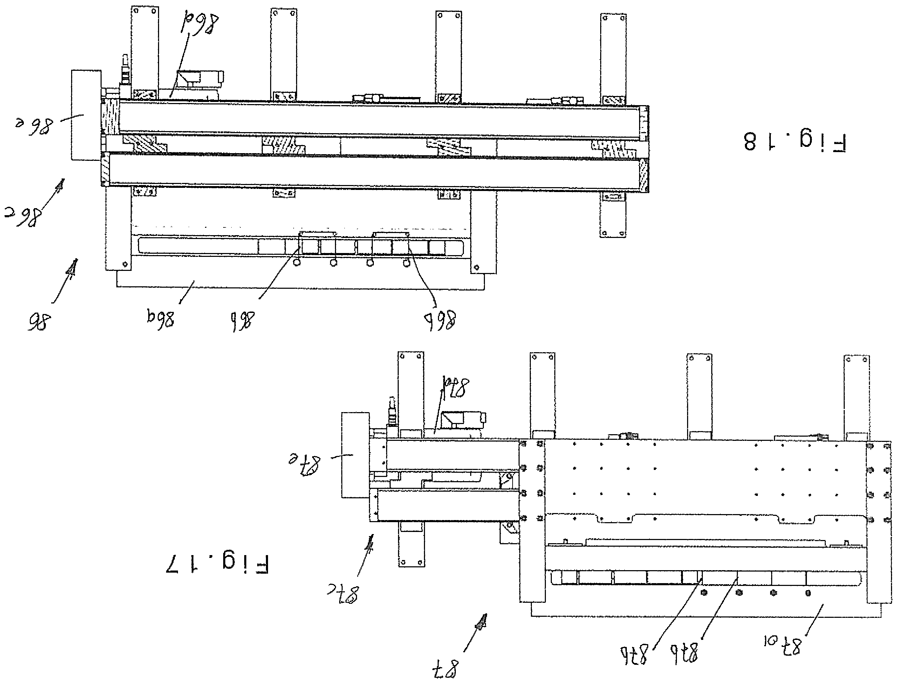

In der Hauptschneidestation 77 sind eine hintere Auflageplatte 83, eine Konturschneidvorrichtung 84 und eine vordere Auflageplatte 85 in Längsrichtung der Anlage in einer Linie hintereinander angeordnet. In der Hauptschneidestation 77 ist eine geradlinige Transportbahn für die Blöcke vorgesehen. Die Transportbahn erstreckt sich in Längsrichtung der Anlage von der hinteren Auflageplatte 83 durch die Konturschneidvorrichtung 84 zur vorderen Auflageplatte 85. Zwischen der hinteren Auflageplatte 83 und der vorderen Auflageplatte 85 ist die Konturschneidvorrichtung 84 angeordnet. Die Konturschneidvorrichtung 84 ist quer zur Transportbahn angeordnet. Die Konturschneidvorrichtung 84 enthält zwei Konturschneidmodule 86, 87. Diese sind in Längsrichtung der Anlage hintereinander angeordnete und mit in Querrichtung der Anlage verfahrbaren Schneidwerkzeugen versehen. Jedes Konturschneidmodul 86, 87 enthält einen in Querrichtung der Anlage verfahrbaren Konturschneidrahmen 86a, 87a und ein mit diesem verbundenes Antriebsmodul 86c, 87c, das die Querbewegungen des Konturschneidrahmens 86a, 87a erzeugt. Jeder Konturschneidrahmen 86a, 87a enthält zumindest einen vertikalen Schneiddraht 86b, 87b (Fig. 17 und 18).

In der Hauptschneidestation 77 ist eine Hauptfördereinrichtung 88 für die Blöcke vorgesehen. Die Hauptfördereinrichtung 88 erstreckt sich in Längsrichtung der Anlage und umfasst eine die Blöcke vorwärts bewegende, erste Transporteinheit 88a und eine die Blöcke rückwärts bewegende, zweite Transporteinheit 88b.

Die erste Transporteinheit 88a ist der hinteren Auflageplatte 83 in Längsrichtung der Anlage vorgelagert. Die erste Transporteinheit 88a sieht einen hinteren Blockschieber 89 vor, der entlang der hinteren Auflageplatte 83 in Längsrichtung der Anlage hin und her bewegbar ist. Die erste Transporteinheit 88a sieht ein mit dem hinteren Blockschieber 89 verbundenes Antriebsmodul 90 vor, das die Längsbewegungen des hinteren Blockschiebers 89 erzeugt. Das Antriebsmodul 90 ist unterhalb der geradlinigen Transportbahn angeordnet. Das Antriebsmodul 90 sieht einen in Längsrichtung der Anlage angeordneten Kugelgewindespindeltrieb 91 vor. Der Kugelgewindespindeltrieb 91 umfasst eine Kugelgewindespindel 91a und eine Kugelgewindespindelmutter 91b. Der Blockschieber 89 der ersten Transporteinheit 88a ist mit der Kugelgewindespindelmutter 91b starr verbunden. Die Kugelgewindespindel 91a wird am hinteren Ende von einem Antriebsmotor 92 angetrieben, der mit der Kugelgewindespindel 91a über einen Zahnriementrieb 93 gekoppelt ist. Die Kugelgewindespindel 91a wird vom Antriebsmotor 92 im Uhrzeigersinn oder im Gegenuhrzeigersinn gedreht, um den Blockschieber 89 in Längsrichtung der Anlage vorwärts bzw. rückwärts zu bewegen.

Die zweite Transporteinheit 88b ist der vorderen Auflageplatte 85 in Längsrichtung der Anlage nachgeordnet. Die zweite Transporteinheit 88b sieht einen vorderen Blockschieber 94 vor, der entlang der vorderen Auflageplatte 85 in Längsrichtung der Anlage hin und her bewegbar ist. Die zweite Transporteinheit 88b sieht ein mit dem vorderen Blockschieber 94 verbundenes Antriebsmodul 95 vor, das die Längsbewegungen des vorderen Blockschiebers 94 erzeugt. Das Antriebsmodul 95 ist unterhalb der geradlinigen Transportbahn angeordnet. Das Antriebsmodul 95 sieht einen in Längsrichtung der Anlage angeordneten Kugelgewindespindeltrieb 96 vor. Der Kugelgewindespindeltrieb 96 umfasst eine Kugelgewindespindel 96a und eine Kugelgewindespindelmutter 96b. Der Blockschieber 94 der zweiten Transporteinheit 88 ist mit der Kugelgewindespindelmutter 96b starr verbunden. Die Kugelgewindespindel 96a wird am hinteren Ende von einem Antriebsmotor 97 angetrieben, der mit der Kugelgewindespindel 96a über einen Zahnriementrieb 98 gekoppelt ist. Die Kugelgewindespindel 96a wird vom Antriebsmotor 97 im Uhrzeigersinn oder im Gegenuhrzeigersinn gedreht, um den Blockschieber 94 in Längsrichtung der Anlage vorwärts bzw. rückwärts zu bewegen.

In der Anlage 75 werden die Blöcke von dem der Auflageplatte 80 zugeordneten Querschieber 81 in Querrichtung der Anlage der Hauptschneidestation 77 zugeführt und auf die hintere Auflageplatte 83 der Hauptschneidestation 77 geschoben.

In der Hauptschneidestation 77 werden die auf der hinteren Auflageplatte 83 liegenden Blöcke von den beiden Transporteinheiten 88a, 88b der Hauptfördereinrichtung 88 erfasst. Die beiden Transporteinheiten 88a, 88b schieben die Blöcke längs der geradlinigen Transportbahn in die Konturschneidvorrichtung 84 und durch diese hindurch auf die vorderen Auflageplatte 85 der Hauptschneidestation 77.

Während die Blöcke die Konturschneidvorrichtung 84 passieren, werden bei dieser die beiden Konturschneidmodule 86, 87 betätigt. Die beiden Konturschneidmodule 86, 87 bewegen ihre mit Schneiddrähten 86b, 87b versehenen Konturschneidrahmen 86a, 87a unabhängig von einander in Querrichtung der Anlage hin und her. Gleichzeitig werden die Blöcke durch die beiden Transporteinheiten 88a, 88b in Längsrichtung der Anlage nur vorwärts oder auch vorwärts und rückwärts bewegt.

Das hintere Konturschneidmodul 86 erzeugt in den Blöcken Konturschnitte, deren Verlauf sich aus der Kombination der Querbewegungen des Konturschneidrahmens 86a des hinteren Konturschneidmoduls 86 mit den Längsbewegungen der Blöcke ergibt. Die vom vorderen Konturschneidmodul 87 in den Blöcken erzeugten Konturschnitte haben einen anderen Verlauf. Dieser ergibt sich aus der Kombination der vom Konturschneidrahmen 87a des vorderen Konturschneidmoduls 87 erzeugten Querbewegungen mit den Längsbewegungen der Blöcke. Die von den beiden Konturschneidmodulen 86, 87 erzeugten Konturschnitte enthalten jeweils an die Umrisse der herzustellenden Endprodukte angepasste Teilabschnitte. Einander gegenüberliegende Teilabschnitte der beiden Konturschnitte ergänzen einander zum Umriss eines Endproduktes.

Die beiden Konturschneidmodule 86, 87 erzeugen mit ihren in Querrichtung der Anlage hin und her bewegten Schneiddrähten 86b, 87b bei den von den Transporteinheiten 88a, 88b in Längsrichtung der Anlage nur vorwärts bewegten Blöcken zwei unterschiedlich verlaufende Konturschnitte, in denen es keinen Teilabschnitt gibt, der eine entgegen der Vorschubrichtung der Blöcke rückwärts verlaufende Kontur besitzt.

Die beiden Konturschneidmodule 86, 87 erzeugen mit ihren in Querrichtung der Anlage hin und her bewegten Schneiddrähten 86b, 87b bei den von den Transporteinheiten 88a, 88b in Längsrichtung der Anlage vorwärts und rückwärts bewegten Blöcken zwei unterschiedlich verlaufende Konturschnitte, in denen es zumindest einen Teilabschnitt gibt, der eine entgegen der Vorschubrichtung der Blöcke rückwärts verlaufende Kontur besitzt. Die von den Konturschneidmodulen 86, 87 in den vorwärts und rückwärts bewegten Blöcken erzeugten Konturschnitte können auch zwei oder mehrere Teilabschnitte aufweisen, die jeweils eine entgegen der Vorschubrichtung der Blöcke rückwärts verlaufende Kontur besitzen. Die beiden Konturschneidmodule 86, 87 können in den vorwärts und rückwärts bewegten Blöcken Konturschnitte erzeugen, die mit ihren Teilabschnitten an den unregelmäßigen Umriss eines 4-blättrigen Kleeblatts angepasst sind, wobei das hintere Konturschneidmodul 86 einen Konturschnitt erzeugt, dessen Verlauf dem unregelmäßigen Umriss der linken Kleeblatthälfte entspricht, und das vordere Konturschneidmodul 87 einen Konturschnitt erzeugt, dessen Verlauf dem unregelmäßigen Umriss der rechten Kleeblatthälfte entspricht.

In der Hauptschneidestation 77 werden die aus der Konturschneidvorrichtung 84 an der Vorderseite austretenden, zerschnittenen Blöcke von der vorderen Auflageplatte 85 aufgenommen. Der vorderen Auflageplatte 85 ist ein Querschieber 99 zugeordnet, der von einem Arbeitszylinder 100 entlang der vorderen Auflageplatte 85 in Querrichtung der Anlage hin und her bewegt wird. Die auf der vorderen Auflageplatte 85 liegenden, zerschnittenen Blöcke werden vom Querschieber 99 in Querrichtung der Anlage aus der Hauptschneidestation 77 hinaus geschoben. An die vordere Auflageplatte 85 der Hauptschneidestation 77 schließt in Querrichtung der Anlage eine Ausgabeeinrichtung 101 an, die sich bis in die Ausgabestation 78 erstreckt. In der Ausgabeeinrichtung 101 ist eine horizontale Auflageplatte 102 für die zerschnittenen Blöcke vorgesehen. Der Querschieber 99 schiebt einen zerschnittenen Block nach dem anderen auf die Auflageplatte 102. Jeder zerschnittene Block schiebt den vor ihm auf der Auflageplatte 102 liegenden, zerschnittenen Block in Querrichtung der Anlage weiter. Entlang der Auflageplatte 102 sind seitliche Führungsleisten 103 angeordnet, an denen die zerschnittenen Blöcke entlang gleiten. An Stelle der Auflageplatte 102 kann ein Transportband vorgesehen sein, das sich in Querrichtung der Anlage erstreckt und die zerschnittenen Blöcke zur Ausgabestation 78 befördert.

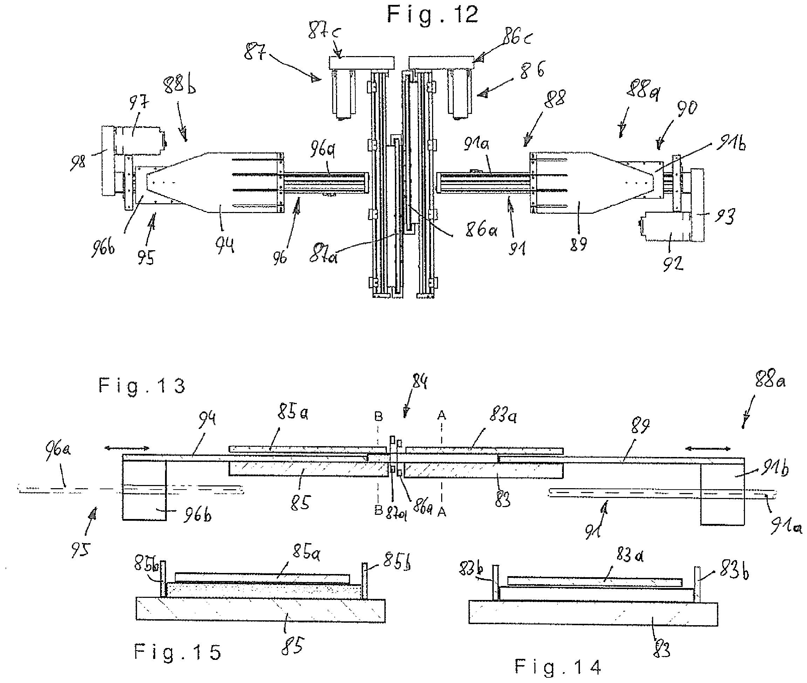

In der Fig. 12 sind die Hauptfördereinrichtung 88 und die Konturschneidvorrichtung 84 der Hauptschneidestation 77 der Anlage 75 dargestellt. In der Mitte von Fig. 12 ist die Konturschneidvorrichtung 84 dargestellt. Das hintere Konturschneidmodul 86 ist in der Fig. 12 rechts und das vordere Konturschneidmodul 87 ist in der Fig. 12 links dargestellt. Die Fig. 12 zeigt vom hinteren Konturschneidmodul 86 den quer zur Transportbahn der Blöcke angeordneten Konturschneidrahmen 86a und das die Querbewegungen des Konturschneidrahmens 86a erzeugende Antriebsmodul 86c. Das Antriebsmodul 86c ist baugleich mit dem Antriebsmodul 56, das beim hinteren Konturschneidmodul der Konturschneidvorrichtung 51 der Anlage 45 vorgesehen ist. Die Fig. 12 zeigt vom vorderen Konturschneidmodul 87 den quer zur Transportbahn der Blöcke angeordneten Konturschneidrahmen 87a und das die Querbewegungen des Konturschneidrahmens 87a erzeugende Antriebsmodul 87c. Das Antriebsmodul 87c ist baugleich mit dem Antriebsmodul 57, das beim vorderen Konturschneidmodul der Konturschneidvorrichtung 51 der Anlage 45 vorgesehen ist.

Fig. 12 zeigt die beiden Transporteinheiten 88a und 88b der längs der Transportbahn der Blöcke angeordneten Hauptfördereinrichtung 88. Die der Konturschneidvorrichtung 84 vorgelagerte, erste Transporteinheit 88a ist in Fig. 12 rechts dargestellt. Die der Konturschneidvorrichtung 84 nachgeordnete, zweite Transporteinheit 88b ist in Fig. 12 links dargestellt. Die Fig. 12 zeigt von der ersten Transporteinheit 88a den hinteren Blockschieber 89 und das Antriebsmodul 90 mit dem in Längsrichtung der Anlage 75 angeordneten Kugelgewindespindeltrieb 91 samt Antriebsmotor 92. Die Fig. 12 zeigt von der zweiten Transporteinheit 88b den vorderen Blockschieber 94 und das Antriebsmodul 95 mit dem in Längsrichtung der Anlage angeordneten Kugelgewindespindeltrieb 96 samt Antriebsmotor 97.

Fig. 13 zeigt einen Längsschnitt durch die Hauptschneidestation 77. Fig. 13 zeigt einen, ein Stück in die Konturschneidvorrichtung 84 hinein geschobenen Block (B). Der Block (B) liegt mit seinem größeren Teil auf der hinteren Auflageplatte 83 und vor dem hinteren Blockschieber 89 der ersten Transporteinheit 88a. Ein kleiner, bereits zerschnittener Teil des Blocks (B) liegt auf der vorderen Auflageplatte 85 und vor dem vorderen Blockschieber 94 der zweiten Transporteinheit 88b.

Über der hinteren Auflageplatte 83 ist eine obere Platte 83a angeordnet. Diese dient als Niederhalter für den auf der hinteren Auflageplatte 83 liegenden Block. Über der hinteren Auflageplatte 83 sind die Transportbahn der Blöcke seitlich begrenzende Führungsleisten 83b angeordnet. Fig. 14 zeigt einen auf der hinteren Auflageplatte 83 zwischen den beiden Führungsleisten 83b liegenden Block in einem vertikalen Schnitt gemäß der Linie A-A in Fig. 13

Über der vorderen Auflageplatte 85 ist eine obere Platte 85a angeordnet. Diese dient als Niederhalter für die aus der Konturschneidvorrichtung 84 austretenden, zerschnittenen Blöcke. Über der vorderen Auflageplatte 85 sind die Transportbahn der Blöcke seitlich begrenzende Führungsleisten 85b angeordnet. Fig. 15 zeigt einen auf der vorderen Auflageplatte 85 zwischen den beiden Führungsleisten 85b liegenden, zerschnittenen Block in einem vertikalen Schnitt gemäß der Linie B-B in Fig. 13.

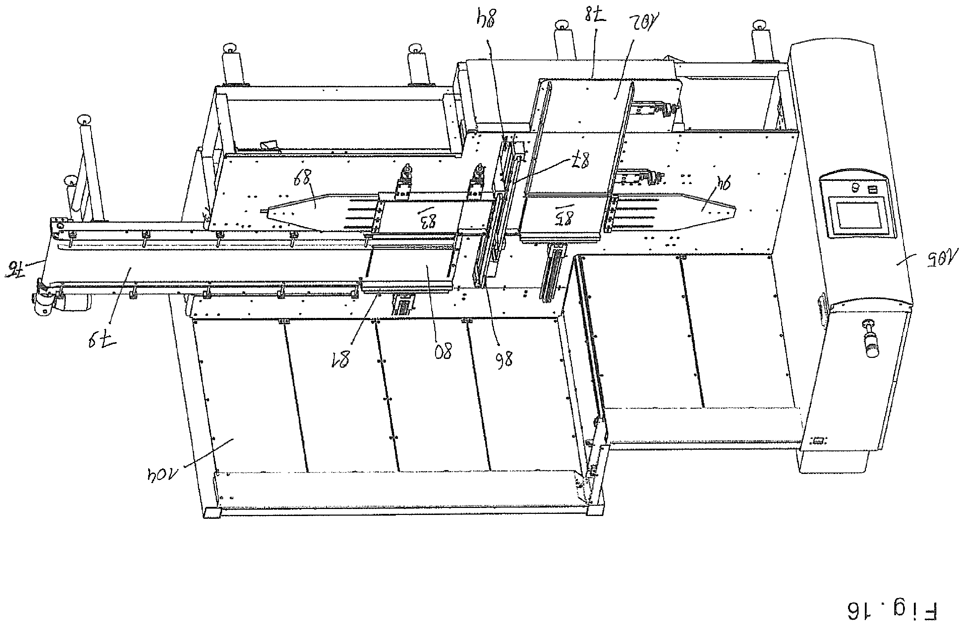

Fig. 16 zeigt eine Schrägansicht der Anlage 75 ohne die über der hinteren Auflageplatte 83 angeordnete, obere Platte 83a und ohne die über der vorderen Auflageplatte 85 angeordnete, obere Platte 85a. Fig. 16 zeigt die entlang der Rückseite der Anlage 75 angeordneten vertikalen Wände 104, die den Innenraum der Anlage 75 nach außen begrenzen. An dem in Fig. 16 linken Rand der Anlage 75 ist der zur Anlage 75 gehörende Schaltschrank 105 dargestellt.

Fig. 17 und 18 zeigen die Konturschneidmodule 87 der Konturschneidvorrichtung 84.

Fig. 17 zeigt das vordere Konturschneidmodul 87 mit dem in Querrichtung der Anlage verfahrbaren Konturschneidrahmen 87a und dem die Querbewegungen des Konturschneidrahmens 87a erzeugenden Antriebsmodul 87c. Fig. 17 zeigt den Konturschneidrahmen 87a in seiner linken Endstellung. Der Konturschneidrahmen 87a enthält ein langgestrecktes, rechteckiges Fenster. In der linken Hälfte des Fensters sind vier vertikale Schneiddrähte 87b mit Abstand nebeneinander angeordnet. Die recht Hälfte des Fensters ist frei von Schneiddrähten und dient dem ungehinderten Durchtritt der Blöcke. Das Antriebsmodul 87c ist mit einem von einem Antriebsmotor 87d über einen Zahnriementrieb 87e angetriebenen Kugelgewindespindeltrieb versehen, der sich in Querrichtung der Anlage erstreckt und dessen Kugelgewindespindelmutter mit dem Konturschneidrahmen 87a starr verbunden ist. In Fig. 17 sind von dem Antriebsmodul 87c nur die am rechten Ende des vorderen Konturschneidmoduls 87 angeordneten Bauteile, Antriebsmotor 87d und Zahnriementrieb 87e, zu sehen.

Fig. 18 zeigt das hintere Konturschneidmodul 86 mit dem in Querrichtung der Anlage verfahrbaren Konturschneidrahmen 86a und dem die Querbewegungen des Konturschneidrahmens 86a erzeugenden Antriebsmodul 86c. Fig. 18 zeigt den Konturschneidrahmen 86a in seiner rechten Endstellung. Der Konturschneidrahmen 86a enthält ein langgestrecktes, rechteckiges Fenster. In der linken Hälfte des Fensters sind vier vertikale Schneiddrähte 86b mit Abstand nebeneinander angeordnet. Die recht Hälfte des Fensters ist frei von Schneiddrähten und dient dem ungehinderten Durchtritt der Blöcke. Das Antriebsmodul 86c ist mit einem von einem Antriebsmotor 86d über einen Zahnriementrieb 86e angetriebenen Kugelgewindespindeltrieb versehen, der sich in Querrichtung der Anlage erstreckt und dessen Kugelgewindespindelmutter mit dem Konturschneidrahmen 86a starr verbunden ist. In Fig. 18 sind von dem Antriebsmodul 86c nur die am rechten Ende des vorderen Konturschneidmoduls 86 angeordneten Bauteile, Antriebsmotor 86d und Zahnriementrieb 86e, zu sehen.

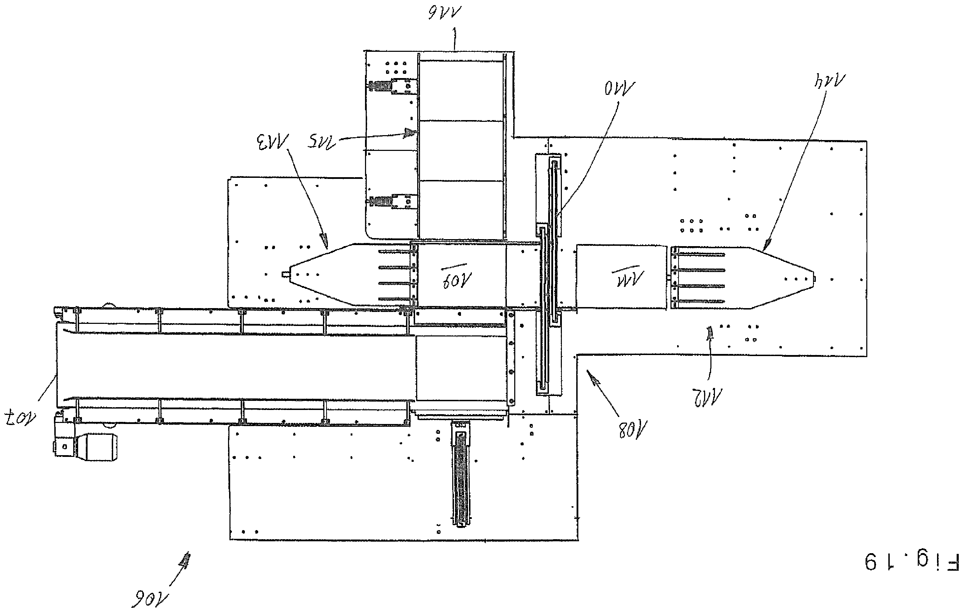

Die Fig. 19 zeigt in einer Draufsicht eine weitere erfindungsgemäße Anlage 106. In der Anlage 106 werden die Endprodukte mit einem einzigen Konturschnitt aus den Blöcken herausgeschnitten.

Die Anlage 106 sieht eine am Rand der Anlage 106 angeordnete Eingabestation 107 und eine im Inneren der Anlage 106 angeordnete Hauptschneidestation 108 vor.

In der Hauptschneidestation 108 sind eine hintere Auflageplatte 109, eine Konturschneidvorrichtung 110 und eine vordere Auflageplatte 111 entlang einer geradlinigen Transportbahn in Längsrichtung der Anlage 106 hintereinander angeordnet. Die Konturschneidvorrichtung 110 ist quer zu der Transportbahn angeordnet. Die Konturschneidvorrichtung 110 enthält zumindest ein Konturschneidmodul, das zumindest ein Schneidwerkzeug besitzt und dieses in Querrichtung der Anlage hin und her bewegt. Entlang der Transportbahn ist eine Hauptfördereinrichtung 112 angeordnet. Diese sieht eine der Konturschneidvorrichtung 110 vorgelagerte, erste Transporteinheit 113 und eine der Konturschneidvorrichtung 110 nachgeordnete, zweite Transporteinheit 114 vor. Die Blöcke werden in der Hauptschneidestation 108 durch die beiden Transporteinheiten 113 und 114 in Längsrichtung der Anlage hin und her bewegt, während das Konturschneidmodul der Konturschneidvorrichtung 110 sein Schneidwerkzeug in Querrichtung der Anlage hin und her bewegt.

Die Konturschneidvorrichtung 110 erzeugt in jedem Block nur einen einzigen Konturschnitt. Eine Hälfte des Konturschnitts wird während der Vorwärtsbewegung des Blocks erzeugt, die andere Hälfte während der Rückwärtsbewegung des Blocks. Der Block wird von der hinteren Auflageplatte 109 nach vorne auf die vordere Auflageplatte 111 geschoben und von der vorderen Auflageplatte 111 nach hinten auf die hintere Auflageplatte 109. Für die Erzeugung eines Konturschnitts, der dem Umfang einer Kreisscheibe entspricht, wird der Block nur einmal vorwärts und einmal rückwärts bewegt. Für die Erzeugung eines Konturschnitts, der dem unregelmäßigen Umfang eines 4-blättrigen Kleeblatt entspricht, wird der Block während der Erzeugung der ersten Hälfte des Konturschnitts mehrfach vorwärts und rückwärts bewegt und ebenso während der Erzeugung der zweiten Hälfte des Konturschnitts.

Nach der Ausführung des Konturschnitts liegt der zerschnittene Block samt dem Endprodukt auf der hinteren Auflageplatte 109. In der Anlage 106 ist eine an die hintere Auflageplatte 109 in Querrichtung der Anlage anschließende Ausgabeeinrichtung 115 vorgesehen, die sich bis in die Ausgabestation 116 erstreckt und die zerschnittenen Blöcke samt den Endprodukten von der Hauptschneidestation 108 zur Ausgabestation 116 befördert.

Das Konturschneidmodul der Konturschneidvorrichtung 110 kann auch drei oder vier in Querrichtung der Anlage mit Abstand nebeneinander angeordnete Schneidedrähte besitzen, die vom Konturschneidmodul in Querrichtung der Anlage hin und her bewegt werden, während die Blöcke durch die Transporteinheiten 113, 114 längs der geradlinigen Transportbahn vorwärts und rückwärts bewegt werden. Auf diese Weise entstehen in jedem Block drei oder vier in Querrichtung der Anlage nebeneinander angeordnete, als ebene Platte ausgebildete Endprodukte. Die zerschnittenen Blöcke, die jeweils drei oder vier in Querrichtung der Anlage nebeneinander angeordnete Endprodukte enthalten, liegen auf der hinteren Auflageplatte 109 und werden von dort in Querrichtung der Anlage abtransportiert.

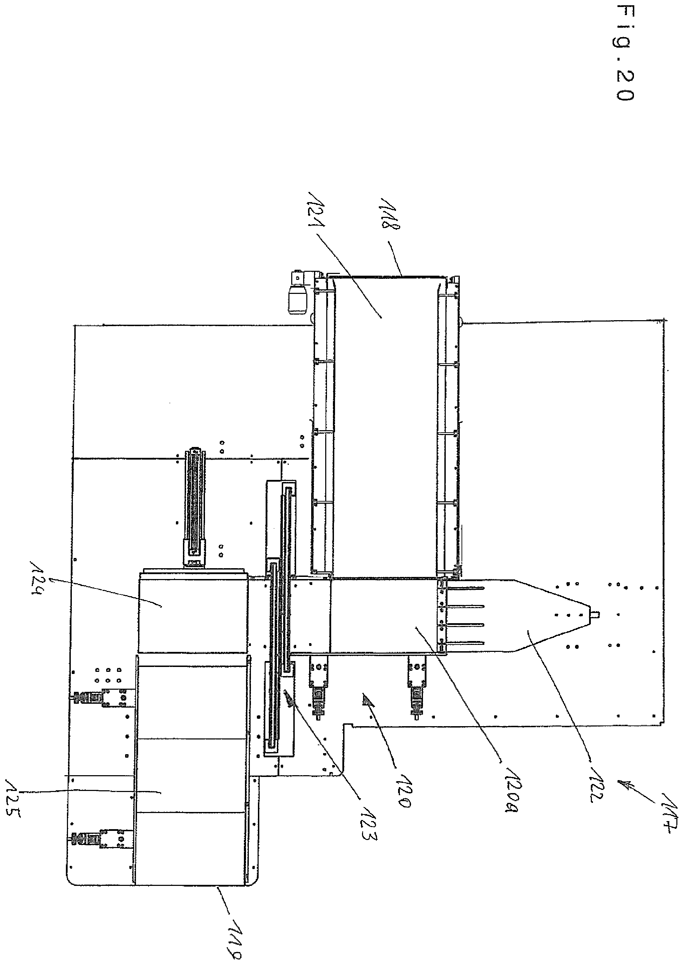

Fig. 20 zeigt in einer Draufsicht eine weitere erfindungsgemäße Anlage 117. Die Eingabestation 118 und die Ausgabestation 119 sind an einander gegenüberliegenden Seitenrändern der Anlage 117 angeordnet. Die Hauptschneidestation 120 ist im Inneren der Anlage 117 angeordnet. Die Hauptschneidestation 120 entspricht in ihrem konstruktiven Aufbau der Hauptschneidestation 48 der Anlage 45 (Fig. 6-10).

In der Anlage 117 werden die Blöcke der Hauptschneidestation 120 in Querrichtung der Anlage zugeführt. Ein Transportband 121 führt von der Eingabestation 118 in Querrichtung der Anlage ins Innere der Anlage zur Hauptschneidestation 120. Das Transportband 121 schiebt die Blöcke in Querrichtung der Anlage auf die hintere Auflageplatte 120a der Hauptschneidestation 120. In der Hauptschneidestation 120 werden die Blöcke vom Blockschieber 122 der Hauptfördereinrichtung in Längsrichtung der Anlage durch die Konturschneidvorrichtung 123 der Hauptschneidestation 120 hindurch bis auf die vordere Auflageplatte 124 der Hauptschneidestation 120 geschoben. Die Blöcke werden beim Passieren die Konturschneidvorrichtung 123 durch die von der Konturschneidvorrichtung 123 erzeugten Konturschnitte zerschnitten. Die dabei entstehenden Endprodukte und Schneidreste werden als zerschnittene Blöcke von der vorderen Auflageplatte 124 aufgenommen.

In der Anlage 117 ist eine an die vordere Auflageplatte 124 der Hauptschneidestation 120 in Querrichtung der Anlage anschließende Ausgabeeinrichtung 125 für die zerschnittenen Blöcke vorgesehen. Die Ausgabeeinrichtung 125 erstreckt sich in Querrichtung der Anlage bis in die Ausgabestation 119. Die Ausgabeeinrichtung 125 entspricht in ihrem konstruktiven Aufbau der Ausgabeeinrichtung 49 der Anlage 45 (Fig. 6-10).

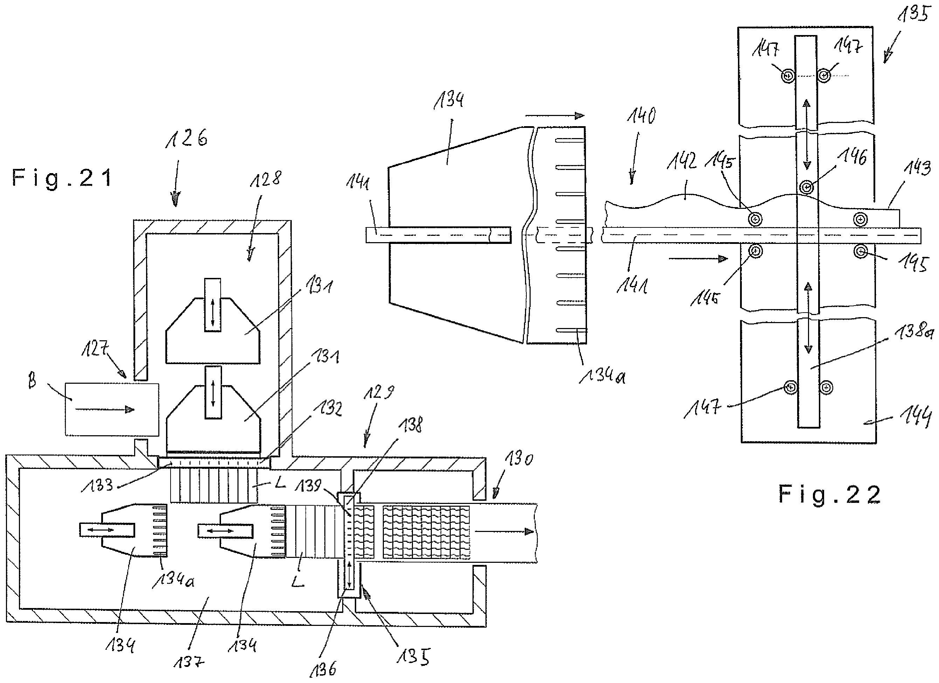

In Fig. 21 ist eine weitere erfindungsgemäße Anlage 126 in Draufsicht dargestellt. Die Anlage 126 umfasst eine am linken Seitenrand angeordnete Eingabestation 127, eine sich in Querrichtung der Anlage erstreckende, erste Schneidestation 128, eine sich in Längsrichtung der Anlage erstreckende Hauptschneidestation 129 und eine am rechten Seitenrand angeordnete Ausgabestation 130.

Die Eingabestation 127 ist neben der ersten Schneidestation 128 angeordnet. Diese sieht eine geradlinige, erste Transportbahn vor. Die erste Transportbahn erstreckt sich in Querrichtung der Anlage. Eine Fördereinrichtung für die Blöcke ist in der ersten Schneidestation 128 angeordnet. Die Fördereinrichtung sieht eine Transporteinheit vor, die einen entlang der ersten Transportbahn verschiebbaren, ersten Blockschieber 131 besitzt. Der besseren Übersichtlichkeit halber ist in Fig. 21 von der Fördereinrichtung nur der erste Blockschieber 131 dargestellt. Fig. 21 zeigt den ersten Blockschieber 131 in seiner hinteren Endstellung und in einer vorderen Arbeitsstellung.

Der ersten Blockschieber 131 schiebt die Blöcke längs der ersten Transportbahn durch eine quer zur ersten Transportbahn angeordnete, erste Schneidvorrichtung 132. Die erste Schneidvorrichtung 132 enthält einen stationär angeordneten, ersten Schneidrahmen 133, der quer zur ersten Transportbahn angeordnet ist und zehn Schneiddrähte enthält, die mit Abstand nebeneinander angeordnet sind. Der ersten Schneidrahmen 133 zerschneidet die längs der ersten Transportbahn vorgeschobenen Blöcke (B) in neun nebeneinander angeordnete Leisten (L). Der erste Schneidrahmen 133 erzeugt geradlinige Schnitte, die sich in Querrichtung der Anlage erstrecken. Die in Leisten (L) zerschnittenen Blöcke (B) werden in Querrichtung der Anlage aus der ersten Schneidestation 128 hinaus geschoben und in die Hauptschneidestation 129 hinein geschoben.

Die Hauptschneidestation 129 sieht eine geradlinige, zweite Transportbahn vor. Die zweite Transportbahn erstreckt sich in Längsrichtung der Anlage 126. In der Hauptschneidestation 129 ist eine Hauptfördereinrichtung vorgesehen, die einen entlang der zweiten Transportbahn verschiebbaren, zweiten Blockschieber 134 besitzt. Der besseren Übersichtlichkeit halber ist in Fig. 21 von der Hauptfördereinrichtung nur der zweite Blockschieber 134 dargestellt. Fig. 21 zeigt den zweiten Blockschieber 134 in seiner hinteren Endstellung und in einer vorderen Arbeitsstellung.

Der zweite Blockschieber 134 schiebt die in Leisten (L) zerschnittenen Blöcke entlang der zweiten Transportbahn durch eine Konturschneidvorrichtung 135, die quer zur zweiten Transportbahn angeordnet ist. Die Konturschneidvorrichtung 135 sieht ein Konturschneidmodul 136 vor, das quer zur zweiten Transportbahn hin und her bewegbare Schneidwerkzeuge besitzt, die in den Leisten (L) Konturschnitte erzeugen, deren Verlauf aus der Kombination der Vorwärtsbewegungen der Leisten (L) mit den Querbewegungen der Schneidwerkzeuge des Konturschneidmoduls 136 entsteht. Die Leisten (L) werden durch die vom Konturschneidmodul 136 erzeugten Konturschnitte zerschnitten. Dabei entstehen die gewünschten Endprodukte. Diese werden von einer der Konturschneidvorrichtung 135 nachgeordneten Auflageplatte 137 aufgenommen. Die Auflageplatte 137 erstreckt sich längs der zweiten Transportbahn bis in die Ausgabestation 130. Statt der Auflageplatte 137 kann auch ein endloses Transportband vorgesehen sein, das die Endprodukte aufnimmt und aus der Anlage 126 hinaus befördert.

Das Konturschneidmodul 136 sieht einen langgestreckten Konturschneidrahmen 138 vor, der quer zur zweiten Transportbahn angeordnet ist und acht Schneiddrähte 139 enthält, die entlang dem Konturschneidrahmen 138 mit Abstand nebeneinander angeordnet sind. Das Konturschneidmodul 136 sieht ein Antriebsmodul 140 vor, das mit dem Konturschneidrahmen 138 verbunden ist und den Konturschneidrahmen 138 quer zur zweiten Transportbahn hin und her bewegt, während die in Leisten (L) zerschnittenen Blöcke entlang der zweiten Transportbahn durch eine Konturschneidvorrichtung 135 geschoben werden. Der Konturschneidrahmen 138 erzeugt mit seinen acht Schneiddrähten 139 in den Leisten (L) acht Konturschnitte. Der Verlauf der Konturschnitte entsteht durch die Kombination der Vorwärtsbewegungen der Leisten (L) mit den Querbewegungen des Konturschneidrahmens 138. Fig. 21 zeigt Konturschnitte mit einem wellenförmigen Verlauf. Die zugehörigen Querbewegungen des Konturschneidrahmens 138 werden von dem Antriebsmodul 140 erzeugt, das in Fig. 22 in vergrößertem Maßstab dargestellt ist.

Das Antriebsmodul 140 sieht eine mit der Hauptfördereinrichtung verbundene, erste Baugruppe und eine in der Konturschneidvorrichtung 135 angeordnete, zweite Baugruppe vor.

Die erste Baugruppe sieht eine entlang der zweiten Transportbahn angeordnete Stange 141 vor, die eine von ihr seitlich abstehende Konturschablone 142 trägt. Die Konturschablone 142 ist als eine horizontal angeordnete, ebene Platte ausgebildet, die einen Längsrand 143 besitzt, dessen Verlauf der herzustellenden Kontur entspricht. Stange 141 und Konturschablone 142 sind unterhalb der zweiten Transportbahn angeordnet. Die Stange 141 ist mit dem Blockschieber 134 der Hauptfördereinrichtung starr verbunden und wird von diesem in Längsrichtung der zweiten Transportbahn hin und her bewegt. Die Stange 141 und die Konturschablone 142 erstrecken sich in Längsrichtung der zweiten Transportbahn vom Blockschieber 134 nach vorne bis zur Konturschneidvorrichtung 135 und über diese ein Stück in Längsrichtung hinaus.

Die zweite Baugruppe sieht eine im Gestell 144 der Konturschneidvorrichtung 135 angeordnete Führungseinrichtung für die Stange 141 vor. Die Führungseinrichtung umfasst zu beiden Seiten der Stange 141 angeordnete Führungsrollen 145, die in Längsrichtung der zweiten Transportbahn hintereinander angeordnet und im Gestell 144 der Konturschneidvorrichtung 135 drehbar gelagert sind. Die zweite Baugruppe sieht eine am Konturschneidrahmen 138 drehbar gelagerte Rolle 146 vor, die an der Konturschablone 142 anliegt. Die Rolle 146 ist an dem unterhalb der zweiten Transportbahn angeordneten, unteren Rahmenteil 138a des Konturschneidrahmens 138 angebracht. Der Konturschneidrahmen 138 wird durch eine nicht dargestellte Feder mit der Rolle 146 in Anlage an der Konturschablone 142 gehalten.

Der Konturschneidrahmen 138 ist quer zur zweiten Transportbahn angeordnet und mit seinem unteren Rahmenteil 138a im Gestell 144 der Konturschneidvorrichtung 135 quer zur zweiten Transportbahn verschiebbar geführt. Die Führungseinrichtung für den Konturschneidrahmen 138 umfasst zu beiden Seiten des unteren Rahmenteils 138a angeordnete Führungsrollen 147, die längs dem unteren Rahmenteil 138a im Abstand von einander angeordnet und im Gestell 144 der Konturschneidvorrichtung 135 drehbar gelagert sind.

Beim Konturschneidmodul 136 leitet das Antriebsmodul 140 die Querbewegungen des Konturschneidrahmens 138 von der Vorwärtsbewegung des Blockschiebers 134 der Hauptfördereinrichtung ab. Mit der Vorwärtsbewegung des Blockschiebers 134 wird die Stange 141 in Längsrichtung der zweiten Transportbahn durch die im Gestell 144 der Konturschneidvorrichtung 135 angeordnete, mit den Führungsrollen 145 versehene Führungseinrichtung geschoben. Die an der Stange 141 befestigte Konturschablone 142 wird in Längsrichtung der zweiten Transportbahn an der am Konturschneidrahmen 138 angebrachten Rolle 146 entlang geschoben. Die Rolle 146 wird von der sich vorwärts bewegenden Konturschablone 142 in Querrichtung hin und her bewegt. Mit der Rolle 146 wird der gesamte Konturschneidrahmen 138 mit seinen Schneiddrähten 139 in Querrichtung hin und her bewegt. Die Querbewegungen der Schneiddrähte 139 folgen dem Verlauf der Konturschablone 142. Die von den Schneiddrähten 139 in den Leisten (L) erzeugten Konturschnitte ergeben eine Kontur, die mit der Kontur der Konturschablone 142 übereinstimmt.

Das in Fig. 22 dargestellte Antriebsmodul erzeugt Konturschnitte mit einem wellenförmigen Verlauf, der durch die Konturschablone 142 vorgegeben ist. Um die Kontur der Konturschnitte zu verändern, braucht man nur die Stange 141 mit der Konturschablone 142 gegen eine andere Stange mit einer anderen Konturschablone auszutauschen.

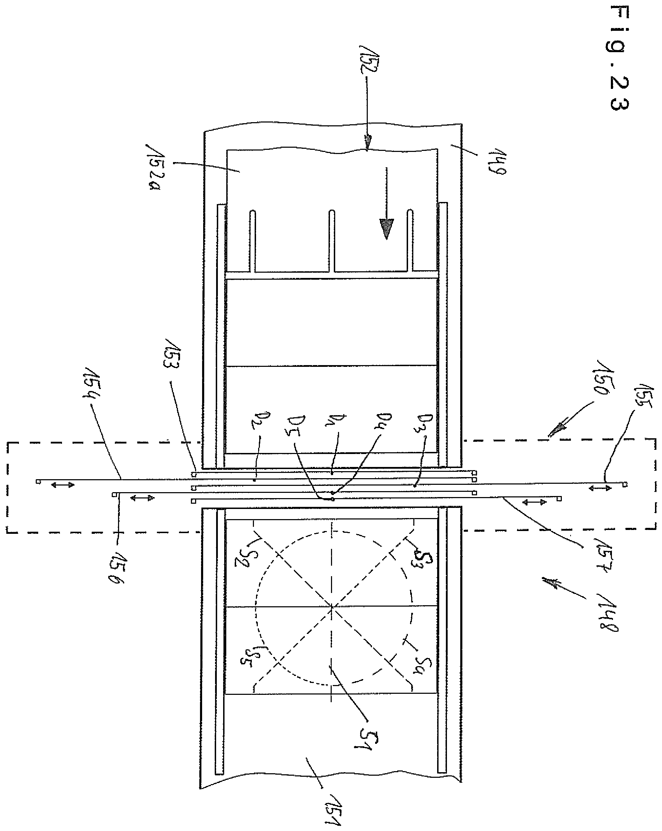

Fig. 23 zeigt eine Hauptschneidestation 148 einer weiteren erfindungsgemäßen Anlage. Die Hauptschneidestation 148 sieht eine geradlinige Transportbahn für die Blöcke vor. Entlang der Transportbahn sind eine hintere Auflageplatte 149, eine quer zur Transportbahn angeordnete Konturschneidvorrichtung 150 und eine vordere Auflageplatte 151 hintereinander angeordnet. Ein Blockschieber 152a der Hauptfördereinrichtung 152 schiebt die Blöcke entlang der Transportbahn von der hinteren Auflageplatte 149 durch die Konturschneidvorrichtung 150 hindurch auf die vordere Auflageplatte 151. Die Blöcke bestehen aus zwei hintereinander angeordneten Hälften. Die Konturschneidvorrichtung 150 sieht fünf hintereinander angeordnete Schneidmodule 153, 154, 155, 156 und 157 vor. Die fünf Schneidmodule erzeugen in den die Konturschneidvorrichtung 150 passierenden Blöcken fünf unterschiedlich verlaufende Schnitte S1, S2, S3, S4 und S5. Die fünf Schnitte zerteilen die beiden

Blockhälften in acht Endprodukte und acht Randstücke. Die Endprodukte entsprechen einer in acht Teile aufgeteilten, kreisrunden Torte.

Das erste Schneidmodul 153 erzeugt in den beiden Blockhälften einen geraden Schnitt S1, der parallel zur Längsrichtung der Transportbahn angeordnet ist. Das erste Schneidmodul 153 sieht einen quer zur Transportbahn angeordneten, stationären Schneidrahmen vor. Der Schneidrahmen enthält einen in der Mitte der Transportbahn angeordneten, vertikalen Schneiddraht D1.

Das zweite Schneidmodul 154 ist als Konturschneidmodul ausgebildet. Es sieht einen quer zur Transportbahn angeordneten Schneidrahmen vor, der mit einem Schneiddraht D2 versehen ist. Der Schneidrahmen wird von einem in Fig. 23 nicht dargestellten Antriebsmodul quer zur Transportbahn von links nach rechts bewegt, während die beiden Blockhälften in Längsrichtung durch die Konturschneidvorrichtung 150 geschoben werden. Der Schneidrahmen erzeugt mit seinem Schneiddraht D2 in den beiden Blockhälften einen von links nach rechts schräg verlaufenden Konturschnitt S2.

Das dritte Schneidmodul 155 ist als Konturschneidmodul ausgebildet. Es sieht einen quer zur Transportbahn angeordneten Schneidrahmen vor, der mit einem Schneiddraht D3 versehen ist. Der Schneidrahmen wird von einem in Fig. 23 nicht dargestellten Antriebsmodul quer zur Transportbahn von rechts nach links bewegt, während die beiden Blockhälften in Längsrichtung durch die Konturschneidvorrichtung 150 geschoben werden. Der Schneidrahmen erzeugt mit seinem Schneiddraht D3 in den beiden Blockhälften einen von rechts nach links schräg verlaufenden Konturschnitt S3.

Das vierte Schneidmodul 156 ist als Konturschneidmodul ausgebildet. Es sieht einen quer zur Transportbahn angeordneten Schneidrahmen vor, der mit einem Schneiddraht D4 versehen ist. Der Schneiddraht D4 ist zu Beginn des Konturschnitts in der Mitte der Transportbahn angeordnet. Der Schneidrahmen wird von einem in Fig. 23 nicht dargestellten Antriebsmodul beim Passieren der ersten Blockhälfte quer zur Transportbahn nach rechts und beim Passieren der zweiten Blockhälfte quer zur Transportbahn nach links geschoben. Am Ende des Konturschnitts ist der Schneiddraht D4 wieder in der Mitte der Transportbahn angeordnet. Der Schneidrahmen erzeugt mit seinem Schneiddraht D4 einen Konturschnitt, der einem Halbkreis entspricht und bei der kreisrunden Torte die linke Hälfte des kreisrunden Umrisses bildet.

Das fünfte Schneidmodul 157 ist als Konturschneidmodul ausgebildet. Es sieht einen quer zur Transportbahn angeordneten Schneidrahmen vor, der mit einem Schneiddraht D5 versehen ist. Der Schneiddraht D5 ist zu Beginn des Konturschnitts in der Mitte der Transportbahn angeordnet. Der Schneidrahmen wird von einem in Fig. 23 nicht dargestellten Antriebsmodul beim Passieren der ersten Blockhälfte quer zur Transportbahn nach links und beim Passieren der zweiten Blockhälfte quer zur Transportbahn nach rechts geschoben. Am Ende des Konturschnitts ist der Schneiddraht D5 wieder in der Mitte der Transportbahn angeordnet. Der Schneidrahmen erzeugt mit seinem Schneiddraht D5 einen Konturschnitt, der einem Halbkreis entspricht und bei der kreisrunden Torte die rechte Hälfte des kreisrunden Umrisses bildet.

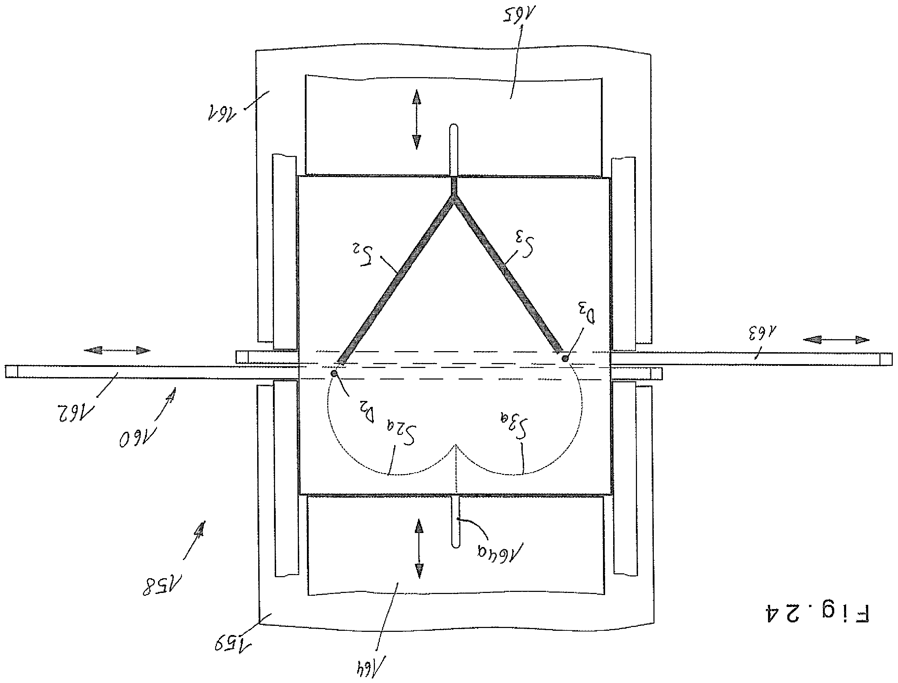

Fig. 24 zeigt eine weitere Ausführungsform der Hauptschneidestation 158. Diese sieht eine geradlinige Transportbahn für die Blöcke vor. Entlang der Transportbahn sind eine hintere Auflageplatte 159, eine Konturschneidvorrichtung 160 und eine vordere Auflageplatte 161 hintereinander angeordnet.

Die Konturschneidvorrichtung 160 ist quer zur Transportbahn angeordnet und sieht zwei Konturschneidmodule 162, 163 vor, die längs der Transportbahn hintereinander angeordnet sind. Das hintere Konturschneidmodul 162 besitzt einen quer zur Transportbahn angeordneten Konturschneidrahmen mit einem vertikal angeordneten Schneiddraht D2. Der Konturschneidrahmen wird von einem unterhalb vom Konturschneidrahmen angeordneten, in Fig. 24 nicht dargestellten Antriebsmodul quer zur Transportbahn hin und her bewegt. Das vordere Konturschneidmodul 163 besitzt einen quer zur Transportbahn angeordneten Konturschneidrahmen mit einem vertikal angeordneten Schneiddraht D3. Der Konturschneidrahmen wird von einem unterhalb vom Konturschneidrahmen angeordneten, in Fig. 24 nicht dargestellten Antriebsmodul quer zur Transportbahn hin und her bewegt.

Entlang der Transportbahn ist eine Hauptfördereinrichtung angeordnet, die eine die Blöcke längs der Transportbahn vorwärts bewegende, erste Transporteinheit und eine die Blöcke längs der Transportbahn rückwärts bewegende, zweite Transporteinheit vorsieht. Die erste Transporteinheit ist der Konturschneidvorrichtung 160 vorgelagert und sieht einen entlang der hintere Auflageplatte 159 in Längsrichtung der Transportbahn hin und her bewegbaren, hinteren Blockschieber 164 vor. Die zweite Transporteinheit ist der Konturschneidvorrichtung 160 nachgeordnet und sieht einen entlang der vorderen Auflageplatte 161 in Längsrichtung der Transportbahn hin und her bewegbaren, vorderen Blockschieber 165 vor. Der besseren Übersichtlichkeit halber sind in Fig. 24 nur die Blockschieber 164 und 165 der beiden Transporteinheiten der Hauptfördereinrichtung dargestellt.

In der Hauptschneidestation 158 wird aus einem quadratischen Block (B) ein herzförmiges Endprodukt herausgeschnitten. In Fig. 24 ist der Block (B) beim Passieren der Konturschneidvorrichtung 160 dargestellt. Der Block (B) liegt mit seinem hinteren Drittel auf der hinteren Auflageplatte 159 und mit seinen beiden vorderen Dritteln auf der vorderen Auflageplatte 161. Hinter dem Block (B) ist der Blockschieber 164 der ersten Transporteinheit der Hauptfördereinrichtung angeordnet. Vor dem Block (B) ist der Blockschieber 165 der zweiten Transporteinheit der Hauptfördereinrichtung angeordnet. Der Blockschieber 164 der ersten Transporteinheit schiebt den Block (B) von der hinteren Auflageplatte 159 nach vorne auf die vorderen Auflageplatte 161. Der Blockschieber 165 der zweiten Transporteinheit schiebt den Block (B) von der vorderen Auflageplatte 161 nach hinten auf die hintere Auflageplatte 159.

Beim Passieren der Konturschneidvorrichtung 160 werden die Konturschneidrahmen der beiden Konturschneidmodule 162, 163 in Querrichtung hin und her bewegt. Das hintere Konturschneidmodul 162 erzeugt mit seinem Schneiddraht D2 einen Konturschnitt S2, der entlang der rechten Hälfte des Endproduktumrisses verläuft. Das vordere Konturschneidmodul 163 erzeugt mit seinem Schneiddraht D3 einen Konturschnitt S3, der entlang der linken Hälfte des Endproduktumrisses verläuft. In Fig. 24 sind die bereits ausgeführten Teilabschnitte der beiden Konturschnitte S2, S3 in dicken Linien dargestellt. Die noch auszuführenden Teilabschnitte der beiden Konturschnitte S2, S3 sind in dünnen Linien dargestellt.

Während der Erzeugung der beiden Konturschnitte S2, S3 wird der Block (B) vom Blockschieber 164 der ersten Transporteinheit vorwärts bewegt. Die Vorwärtsbewegung des Blocks (B) dauert an bis die in Querrichtung hin und her bewegten Schneiddrähte D2, D3 der beiden Konturschneidmodule 162, 163 am hinteren Ende des herzförmigen Endproduktes angekommen sind. Wenn die Schneiddrähte D2, D3 die Scheitel S2a, S3a der beiden bogenförmigen Teilabschnitte der Konturschnitte S2, S3 erreicht haben, wird der Block (B) vom Blockschieber 165 der zweiten Transporteinheit ein Stück rückwärts bewegt. Die Rückwärtsbewegung des Blocks (B) dauert an bis die in Querrichtung nach innen bewegten Schneiddrähte D2, D3 die Längsmittelachse des Blocks (B) erreicht haben und die beiden bogenförmigen Teilabschnitte der Konturschnitte S2, S3 fertig gestellt sind. Anschließend wird der Block (B) vom Blockschieber 164 der ersten Transporteinheit wieder vorwärts bewegt. Während der Vorwärtsbewegung des Blocks (B) erzeugen die an der Längsmittelachse des Blocks (B) angeordneten Schneiddrähte D2, D3 der beiden Konturschneidmodule 162, 163 die geradlinigen Endabschnitte der beiden Konturschnitte S2, S3. Während der weiteren Vorwärtsbewegung das Blocks (B) treten die Schneiddrähte D2, D3 der beiden Konturschneidmodule 162, 163 am hinteren Ende des Blocks (B) aus dem Block (B) aus und werden im Blockschieber 164 von einem Längsschlitz 164a aufgenommen. Am Ende der Vorwärtsbewegung des Blocks (B) liegt der zerschnittene Block (B) auf der vordere Auflageplatte 161.

Fig. 25 zeigt einen Block, der in einer erfindungsgemäßen Anlage in Querrichtung und Längsrichtung zerschnitten wurde. Der Block ist durch in Querrichtung verlaufende, gerade Schnitte in mehrere Leisten (L) zerteilt, die in Längsrichtung hintereinander angeordnet sind. Der Block ist zusätzlich durch in Längsrichtung verlaufende Konturschnitte S1, S2, S3 zerteilt. Die Konturschnitte S1, S2, S3 zerteilen die Leisten (L) in fächerförmige Endprodukte, die in drei Längsreihen zu je 20 Stück angeordnet sind. Die Konturschnitte S1 sind in strichlierten Linien mit langen Strichen dargestellt. Die Konturschnitte S2 sind in strichlierten Linien mit kurzen Strichen dargestellt. Die Konturschnitte S3 sind in durchgezogenen Linien dargestellt.

Fig. 26 zeigt einen rechteckigen Block, der in einer erfindungsgemäßen Anlage in Längsrichtung zerschnitten wurde. Im Block sind fünfzehn als Kreisscheiben ausgebildete Endprodukte enthalten, die in drei Längsreihen angeordnet sind. Der Block wurde von zwei Scharen von Konturschnitten zerschnitten, die jeweils mehrere Teilabschnitte enthalten, deren Kontur einem Halbkreis entspricht. In Fig. 26 ist eine Konturschnittschar in durchgehenden Linien und die andere Konturschnittschar in strichlierten Linien dargestellt ist. Fig. 26 zeigt auch die beim Zerschneiden des Blocks übrig gebliebenen vier Leisten, die sich in Längsrichtung des Blocks erstrecken. Die Längsränder der Leisten enthalten jeweils mehrere Teilabschnitte, deren Kontur einem Halbkreis entspricht.

Fig. 27 zeigt eine Konturschneidvorrichtung 166, die quer zur Transportbahn der Blöcke angeordnet ist. Fig. 27 zeigt die der Konturschneidvorrichtung 166 vorgelagerte, hintere Auflageplatte 167 einer Hauptschneidestation einer erfindungsgemäßen Anlage. Fig. 27 zeigt die Auflageplatte 167 in einem vertikalen Schnitt durch die Transportbahn der Blöcke. Die Auflageplatte 167 ist an der Unterseite der Transportbahn angeordnet. Auf der Auflageplatte 167 liegt ein Block (B) zwischen zwei Führungsleisten 168, 169. Über dem Block (B) ist eine horizontale, obere Platte 170 angeordnet, die als Niederhalter für den Block dient. Die Konturschneidvorrichtung 166 ist mit einem Konturschneidmodul 171 ausgerüstet, das einen mit einem vertikal angeordneten Schneidwerkzeug 172 versehenen Schneidkopf 173 vorsieht. Der Schneidkopf 173 ist oberhalb der Transportbahn angeordnet. Das Schneidwerkzeug 172 durchsetzt die Transportbahn in vertikaler Richtung. Zum Erzeugen der Konturschnitte wird der Schneidkopf 173 quer zur Transportbahn hin und her bewegt, während ein Block längs Transportbahn nur vorwärts, oder vorwärts und rückwärts bewegt wird. Der Verlauf der vom Schneidkopf 173 erzeugten Konturschnitte ergibt sich aus der Kombination der Längsbewegungen des Blocks (B) mit den Querbewegungen des Schneidkopfs 173. Der Schneidkopf 173 kann mit einem Antriebsmodul verbunden sein, das die dem Verlauf des Konturschnitts entsprechenden Querbewegungen des Schneidkopfs erzeugt. Das Antriebsmodul kann ein quer zur Transportbahn angeordneter Kettentrieb sein. Das Antriebsmodul kann ein quer zur Transportbahn angeordneter Kugelgewindespindeltrieb sein.

Fig. 28 zeigt eine weitere Konturschneidvorrichtung 174, die quer zur Transportbahn der Blöcke angeordnet ist. Fig. 28 zeigt die der Konturschneidvorrichtung 174 vorgelagerte, hintere Auflageplatte 175 einer Hauptschneidestation einer erfindungsgemäßen Anlage. Fig. 28 zeigt die Auflageplatte 175 in einem vertikalen Schnitt durch die Transportbahn der Blöcke. Die Auflageplatte 175 ist an der Unterseite der Transportbahn angeordnet. Auf der Auflageplatte 175 liegt ein Block (B) zwischen zwei Führungsleisten 176, 177. Über dem Block (B) ist eine horizontale, obere Platte 178 angeordnet, die als Niederhalter für den Block dient. Die Konturschneidvorrichtung 174 ist mit einem Konturschneidmodul 179 ausgerüstet, das einen mit einem vertikal angeordneten Schneidwerkzeug 180 versehenen Schneidkopf 181 vorsieht. Der Schneidkopf 181 ist oberhalb der Transportbahn angeordnet. Das Schneidwerkzeug 180 durchsetzt die Transportbahn in vertikaler Richtung. Der Schneidkopf 181 ist mit einem in Fig. 28 schematisch dargestellten Linearmotor 182 gekoppelt, der den Schneidkopf 181 quer zur Transportbahn hin und her bewegt.

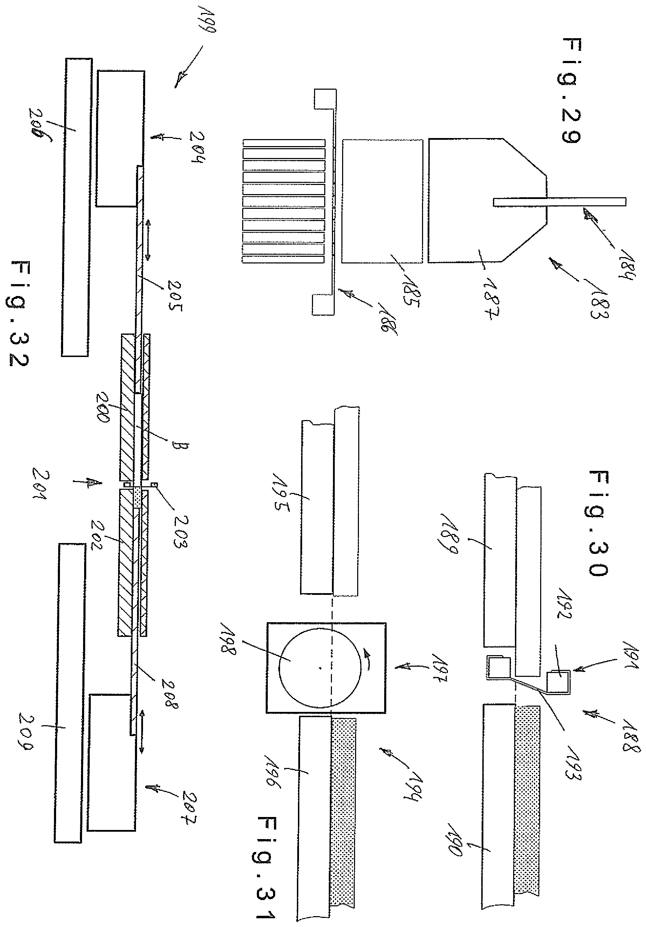

Fig. 29 zeigt schematisch eine erste Schneidestation 183 in Draufsicht. Die erste Schneidestation 183 ist in einer erfindungsgemäßen Anlage der Hauptschneidestation vorgelagert. Die erste Schneidestation 183 sieht eine Fördereinrichtung 184 für die Blöcke vor, die entlang einer geradlinigen Transportbahn angeordnet ist, entlang der eine Auflageplatte 185 für die Blöcke und eine quer zur Transportbahn angeordnete Schneidvorrichtung 186 hintereinander angeordnet sind. Die Fördereinrichtung 184 sieht einen in Längsrichtung der Transportbahn verschiebbaren Blockschieber 187 vor, der die auf der Auflageplatte 185 liegenden Blöcke durch die Schneidvorrichtung 186 schiebt. Die Blöcke werden beim Passieren der Schneidvorrichtung 186 in Leisten (L) zerschnitten.

Fig. 30 zeigt eine Variante der ersten Schneidestation 188. Diese sieht eine zwischen einer ersten Auflageplatte 189 und einer zweiten Auflageplatte 190 angeordnete Schneidvorrichtung 191 vor, die einen quer zur Transportbahn angeordneten Schneidrahmen 192 besitzt, der schräg zur Transportbahn angeordnete Schneiddrähte 193 enthält.

Fig. 31 zeigt eine weitere Variante der ersten Schneidestation 194. Diese sieht eine zwischen einer ersten Auflageplatte 195 und einer zweiten Auflageplatte 196 angeordnete Schneidvorrichtung 197 vor, die mit quer zur Transportbahn nebeneinander angeordneten Schneidwerkzeugen ausgerüstet ist, die als Kreissägen mit vertikal angeordneten Kreissägeblättern 198 ausgebildet sind.

Fig. 32 zeigt einen Längsschnitt durch eine Hauptschneidestation 199. In dieser sind eine hintere Auflageplatte 200, eine Konturschneidvorrichtung 201 und eine vordere Auflageplatte 202 längs einer geradlinigen Transportbahn hintereinander angeordnet. Die Konturschneidvorrichtung 201 ist quer zur Transportbahn angeordnet und enthält einen Konturschneidrahmen 203, der quer zur Transportbahn verfahrbar ist und zumindest einen vertikalen Schneiddraht enthält. Der Konturschneidrahmen 203 wird von einem (in Fig. 32 nicht dargestellten) Antriebsmodul quer zur Transportbahn hin und her bewegt.

Fig. 32 zeigt einen Block (B) beim Passieren der Konturschneidvorrichtung 201. Der Block (B) liegt zum Teil noch auf der hinteren Auflageplatte 200 und bereits zum Teil schon auf der vorderen Auflageplatte 202.

In der Hauptschneidestation 199 ist eine entlang der Transportbahn angeordnete Hauptfördereinrichtung vorgesehen. Die Hauptfördereinrichtung sieht eine der hinteren Auflageplatte 200 vorgelagerte, erste Transporteinheit 204 vor, die einen oberhalb der hinteren Auflageplatte 200 angeordneten Blockschieber 205 besitzt, der über der hinteren Auflageplatte 200 hinter dem Block (B) angeordnet ist. Der Blockschieber 205 wird von einem Linearmotor 206 längs der Transportbahn vorwärts und rückwärts bewegt. Die Hauptfördereinrichtung sieht eine der vorderen Auflageplatte 202 nachgeordnete, zweite Transporteinheit 207 vor, die einen oberhalb der vorderen Auflageplatte 202 angeordneten Blockschieber 208 besitzt, der über der vorderen Auflageplatte 202 vor dem Block (B) angeordnet ist. Der Blockschieber 208 wird von einem Linearmotor 209 längs der Transportbahn vorwärts und rückwärts bewegt.

In der Hauptschneidestation 199 wird der Block (B) von den Blockschiebern 205, 208 der beiden Transporteinheiten 204, 207 längs der Transportbahn vorwärts und rückwärts bewegt, während in der Konturschneidvorrichtung 201 der zumindest einen vertikalen Schneiddraht enthaltende Konturschneidrahmen 203 quer zur Transportbahn hin und her bewegt wird. Bei den von der Konturschneidvorrichtung 201 erzeugten Konturschnitten werden die Querbewegungen des Konturschneidrahmens 203 mit den Längsbewegungen des Blocks kombiniert. Die Kombination der beiden Bewegungen bestimmt den Verlauf des Konturschnitts. Bei dieser Kombination werden die dem Verlauf des Konturschnitts entsprechenden Querbewegungen des Konturschneidrahmens 203 mit den dem Verlauf des Konturschnitts entsprechenden Längsbewegungen des Blocks kombiniert.

Die dem Verlauf des Konturschnitts entsprechenden Querbewegungen des Konturschneidrahmens 203 werden von einem mit dem Konturschneidrahmen 203 verbundenen Antriebsmodul erzeugt, das einen die Querbewegungen des Konturschneidrahmens 203 erzeugenden Antriebsmotor enthält, bei dem die Erzeugung der während des Konturschnitts in Querrichtung der Anlage verlaufenden Bewegungen des Konturschneidrahmens in das Steuerungsprogramm des Linearmotors integriert ist.

Die dem Verlauf des Konturschnitts entsprechenden Längsbewegungen des Blocks werden von den beiden Transporteinheiten 204, 207 erzeugt, die ihre Blockschieber 205, 208 mit Hilfe der Linearmotoren 206, 209 dem Verlauf des Konturschnitts entsprechend, längs der Transportbahn vorwärts und rückwärts bewegen. Die Erzeugung der dem Verlauf des Konturschnitts entsprechenden Vorwärts- und Rückwärtsbewegungen der Blockschieber 205, 208 ist in die Steuerungsprogramme der Linearmotore 206, 209 der Transporteinheiten 204, 207 integriert.

## Patentansprüche

1. Anlage zum Herstellen von Endprodukten durch das Zerschneiden von Flach- oder Hohlwaffelblöcken, wobei in der Anlage eine Eingabestation für die Blöcke, zumindest eine Schneidestation zum Zerschneiden der Blöcke und eine Ausgabestation für die Endprodukte vorgesehen sind, wobei eine Hauptschneidestation (3, 48, 77, 108, 129, 148, 158, 199) vorgesehen ist, in der eine die Blöcke durch Konturschnitte zerschneidende Konturschneidvorrichtung (12, 51, 84, 110, 135, 150, 160, 166, 174, 201) vorgesehen ist und wobei eine geradlinige Transportbahn vorgesehen ist, die sich in Längsrichtung der Anlage erstreckt, ***dadurch gekennzeichnet,* dass** die Konturschneidvorrichtung (12, 51, 84, 110, 135, 150, 160, 166, 174, 201) quer zur Transportbahn angeordnet ist, dass in der Hauptschneidestation (3, 48, 77, 108, 129, 148, 158, 199) eine entlang der Transportbahn angeordnete Hauptfördereinrichtung (6, 58, 88, 112, 134, 152, 164, 165, 204, 207) für die Blöcke vorgesehen ist, und dass die Konturschneidvorrichtung (12, 51, 84, 110, 123, 135, 150, 160, 166, 174, 201) zumindest ein Konturschneidmodul (13, 51a, 51b, 86, 87, 153, 154, 155, 156, 157, 162, 163, 171, 179) vorsieht, das mit zumindest einem in Querrichtung der Anlage hin und her bewegbaren Schneidwerkzeug (14a, 86b, 87b, D1, D2, D3, D4, D5, 172,180) versehen ist, das in den die Konturschneidvorrichtung (12, 51, 84, 110, 123, 135, 150, 160, 166, 174, 201) in Längsrichtung der Anlage passierenden Blöcken einen Konturschnitt (S1, S2, S2a, S3, S3a, S4, S5) erzeugt.

2. Anlage nach Anspruch 1, ***dadurch gekennzeichnet,* dass** die Konturschneidvorrichtung (51, 84) zwei in Längsrichtung der Anlage hintereinander angeordnete und zwei unterschiedliche Konturschnitte erzeugende Konturschneidmodule (51a, 51b, 86, 87) aufweist,
oder dass die Konturschneidvorrichtung (150) drei in Längsrichtung der Anlage hintereinander angeordnete und drei unterschiedliche Konturschnitte (S1, S2, S3, S4, S5) erzeugende Konturschneidmodule (153, 154, 155, 156, 157) aufweist.

3. Anlage nach einem der Ansprüche 1-2, ***dadurch gekennzeichnet,* dass** als Konturschneidmodul (171, 179) ein in Querrichtung der Anlage verfahrbarer Schneidkopf (173, 181) vorgesehen ist, der zumindest ein vertikal angeordnetes, die Transportbahn der Blöcke in vertikaler Richtung durchsetzendes Schneidwerkzeug (172, 180) trägt,
und dass das Konturschneidmodul (171, 179) ein mit dem Schneidkopf (173, 181) verbundenes Antriebsmodul aufweist, das die während des Konturschnitts in Querrichtung der Anlage verlaufenden Bewegungen des Schneidkopfs (173, 181) erzeugt.

4. Anlage nach Anspruch 3, ***dadurch gekennzeichnet,* dass** das Antriebsmodul eine Kontur-Schablone enthält, von der die während des Konturschnittes in Querrichtung der Anlage verlaufenden Bewegungen des Schneidkopfs abgenommen werden,
oder dass das Antriebsmodul mit einer die Kontur des Endproduktes von einer Kontur-Schablone oder einem Originalmodell abnehmenden Kopiereinrichtung gekoppelt ist,
oder dass das Antriebsmodul eine den Schneidkopf in Querrichtung der Anlage hin und her bewegende Bewegungseinrichtung enthält, die mit einem Antriebsmotor gekoppelt ist, bei dem die Erzeugung der während des Konturschnitts in Querrichtung der Anlage verlaufenden Bewegungen des Schneidkopfs in das Steuerungsprogramm des Antriebsmotors integriert ist, oder dass als Antriebsmodul ein den Schneidkopf (181) in Querrichtung der Anlage hin und her bewegender Linearmotor (182) vorgesehen ist, bei dem die Erzeugung der während des Konturschnitts in Querrichtung der Anlage verlaufenden Bewegungen des Schneidkopfs (181) in das Steuerungsprogramm des Linearmotors integriert ist.

5. Anlage nach einem der Ansprüche 1-2, ***dadurch gekennzeichnet,* dass** ein Konturschneidmodul (13, 51a, 51b, 86, 87, 153, 154, 155, 156, 157, 162, 163) vorgesehen ist, bei dem ein in Querrichtung der Anlage verfahrbarer Konturschneidrahmen (14, 54, 55, 86a, 87a, 138) zumindest einen vertikal angeordneten Schneiddraht (14a, D1, D2, D3, D4, D5) enthält und mit einem Antriebsmodul (56, 57, 86c, 87c, 140) verbunden ist, das die während des Konturschnitts in Querrichtung der Anlage verlaufenden Bewegungen des Konturschneidrahmens (14, 54, 55, 86a, 87a, 138) erzeugt.

6. Anlage nach Anspruch 5, ***dadurch gekennzeichnet,* dass** das Antriebsmodul (56, 57, 86c, 87c, 140) eine Kontur-Schablone enthält, von der die während des Konturschnittes in Querrichtung der Anlage verlaufenden Bewegungen des Konturschneidrahmens (14, 54, 55, 86a, 87a, 138) abgenommen werden, oder dass das Antriebsmodul (56, 57, 86c, 87c, 140) gegebenenfalls mit einer die Kontur des Endproduktes von einer Kontur-Schablone oder einem Originalmodell abnehmenden Kopiereinrichtung gekoppelt ist.

7. Anlage nach Anspruch 5, ***dadurch gekennzeichnet,* dass** das Antriebsmodul (56, 57) eine mit einem Antriebsmotor (56b, 57b) gekoppelte Bewegungseinrichtung (56a, 57a) enthält, die den Konturschneidrahmen (54, 55) in Querrichtung der Anlage hin und her bewegt, und dass die Erzeugung der während des Konturschnitts in Querrichtung der Anlage verlaufenden Bewegungen des Konturschneidrahmens (54, 55) in das Steuerungsprogramm des Antriebsmotors (56b, 57b) integriert ist, wobei der Antriebsmotor insbesondere als Servomotor (56b, 57b) und die Bewegungseinrichtung insbesondere als ein sich in Querrichtung der Anlage erstreckender Kugelgewindespindeltrieb (56a, 57a) ausgebildet ist.

8. Anlage nach Anspruch 5, ***dadurch gekennzeichnet,* dass** als Antriebsmodul ein den Konturschneidrahmen (14, 54, 55, 86a, 87a, 138) in Querrichtung der Anlage hin und her bewegender Linearmotor vorgesehen ist, bei dem die Erzeugung der während des Konturschnitts in Querrichtung der Anlage verlaufenden Bewegungen des Konturschneidrahmens (14, 54, 55, 86a, 87a, 138) in das Steuerungsprogramm des Linearmotors integriert ist.

9. Anlage nach einem der Ansprüche 5-8, ***dadurch gekennzeichnet,* dass** der Konturschneidrahmen (86a, 87a, 138) zwei oder mehrere, vertikal angeordnete Schneidedrähte (86b, 87b, 139) enthält, die in Querrichtung der Anlage im Abstand von einander angeordnet sind.

10. Anlage nach einem der Ansprüche 1-9, ***dadurch gekennzeichnet,* dass** die Konturschneidvorrichtung (150) zumindest ein zusätzliches Schneidmodul (153) vorsieht, das mit zumindest einem stationären Schneidwerkzeug (D1) versehen ist, das in den Blöcken einen zur Längsrichtung der Anlage parallelen, geraden Schnitt (S1) erzeugt, wobei das zusätzliche Schneidmodul (153) insbesondere mit einem stationären Schneidrahmen versehen ist, der zumindest einen, im wesentlichen vertikal angeordneten Schneiddraht (D1) enthält.

11. Anlage nach einem der Ansprüche 1-10, ***dadurch gekennzeichnet,* dass** die Anlage (1, 20) mit einer in Längsrichtung der Anlage verlaufenden, geradlinigen Transportbahn versehen ist, die sich von der Eingabestation (2, 21) durch die Hauptschneidestation (3, 24) hindurch bis in die Ausgabestation (4, 25) erstreckt, dass die Konturschneidvorrichtung (12, 51) in der Hauptschneidestation (3, 24) quer zu der geradlinigen Transportbahn angeordnet ist, und dass der Konturschneidvorrichtung (12, 51) ein endloses Produktförderband (15, 42) nachgeordnet ist, das die Endprodukte aufnimmt und sich entlang der geradlinigen Transportbahn bis in die Ausgabestation (4, 25) der Anlage erstreckt.

12. Anlage nach Anspruche 11, ***dadurch gekennzeichnet,* dass** der Hauptschneidestation (24) eine die Blöcke in Querrichtung der Anlage zerschneidende, erste Schneidestation (23) vorgelagert ist, in der eine erste Schneidvorrichtung (37) mit quer zur Transportbahn hin und her bewegbaren Messern (38) vorgesehen ist.

13. Anlage nach einem der Ansprüche 1-10, ***dadurch gekennzeichnet,* dass** der Konturschneidvorrichtung (51, 123) eine hintere Auflageplatte (52, 121) und eine Transporteinheit (58a, 122) der Hauptfördereinrichtung vorgelagert ist, wobei die Transporteinheit (58a, 122) die Blöcke entlang der geradlinigen Transportbahn in Längsrichtung der Anlage (45, 117) vorwärts bewegt und einen entlang der hinteren Auflageplatte (52, 121) in Längsrichtung der Anlage (45, 117) verschiebbaren, hinteren Blockschieber (59, 122) besitzt.

14. Anlage nach einem der Ansprüche 1-10, ***dadurch gekennzeichnet,* dass** die Konturschneidvorrichtung (84, 110, 123, 150, 160, 201) zwischen einer hinteren Auflageplatte (83, 109, 121, 149, 159, 200) und einer vorderen Auflageplatte (85, 111, 151, 161, 202) angeordnet ist und dass die Hauptfördereinrichtung eine der hinteren Auflageplatte (83, 109, 121, 149, 159, 200) vorgelagerte, erste Transporteinheit (88a, 113, 164, 204) und eine der vorderen Auflageplatte (85, 111, 151, 161, 202) nachgeordnete, zweite Transporteinheit (88b, 114, 165, 207) vorsieht, dass die erste Transporteinheit (88a, 113, 164, 204) die Blöcke in Längsrichtung der Anlage vorwärts bewegt und mit einem entlang der hinteren Auflageplatte (83, 109, 121, 149, 159, 200) in Längsrichtung der Anlage verschiebbaren, hinteren Blockschieber (89, 164, 206) versehen ist, und dass die zweite Transporteinheit (88b, 114, 165, 207) die Blöcke in Längsrichtung der Anlage rückwärts bewegt und mit einem entlang der vorderen Auflageplatte (85, 111, 151, 161, 202) in Längsrichtung der Anlage verschiebbaren, vorderen Blockschieber (94, 165, 209) versehen ist.

## Claims

1. A system for producing end products by cutting flat or hollow wafer blocks, wherein an input station for the blocks, at least one cutting station for cutting the blocks and a dispensing station for the end products are provided in the system, wherein a main cutting station (3, 48, 77, 108, 129, 148, 158, 199) is provided, in which a contour cutting apparatus (12, 51, 84, 110, 135, 150, 160, 166, 174, 201) cutting the blocks by contour cuts is provided and wherein a linear transport path which extends in the longitudinal direction of the system is provided, **characterised in that**
the contour cutting apparatus (12, 51, 84, 110, 135, 150, 160, 166, 174, 201) is arranged transversely to the transport path, **in that** a main conveying device (6, 58, 88, 112, 134, 152, 164, 165, 204, 207) for the blocks which is arranged along the transport path is provided in the main cutting station (3, 48, 77, 108, 129, 148, 158, 199), and **in that** the contour cutting apparatus (12, 51, 84, 110, 123, 135, 150, 160, 166, 174, 201) provides at least one contour cutting module (13, 51a, 51b, 86, 87, 153, 154, 155, 156, 157, 162, 163, 171, 179) which is provided with at least one cutting tool (14a, 86b, 87b, D1, D2, D3, D4, D5, 172, 180) which is movable to and fro in the transverse direction of the system and which produces a contour cut (S1, S2, S2a, S3, S3a, S4, S5) in the blocks passing through the contour cutting apparatus (12, 51, 84, 110, 123, 135, 150, 160, 166, 174, 201) in the longitudinal direction of the system.

2. The system according to Claim 1, **characterised in that** the contour cutting apparatus (51, 84) comprises two contour cutting modules (51a, 51b, 86, 87) arranged consecutively in the longitudinal direction of the system and producing two different contour cuts, or in that the contour cutting apparatus (150) comprises three contour cutting modules (153, 154, 155, 156, 157) arranged consecutively in the longitudinal direction of the system and producing three different contour cuts (S1, S2, S3, S4, S5).

3. The system according to one of Claims 1-2, **characterised in that** a cutting head (173, 181) which is movable in the transverse direction of the system is provided as a contour cutting module (171, 179), said cutting head bearing at least one vertically arranged cutting tool (172, 180) passing through the transport path of the blocks in the vertical direction, and
**in that** the contour cutting module (171, 179) comprises a drive module which is connected to the cutting head (173, 181) and which produces the movements of the cutting head (173, 181) running in the transverse direction of the system during the contour cut.

4. The system according to Claim 3, **characterised in that** the drive module contains a contour template from which the movements of the cutting head running in the transverse direction of the system during the contour cut are acquired, or
**in that** the drive module is coupled to a copying device acquiring the contour of the end product from a contour template or an original model, or
**in that** the drive module contains a movement device which moves the cutting head to and fro in the transverse direction of the system and which is coupled to a drive motor, in which the generation of the movements of the cutting head running in the transverse direction of the system during the contour cut is integrated in the control programme of the drive motor, or
**in that** a linear motor (182) which moves the cutting head (181) to and fro in the transverse direction of the system is provided as the drive module, in which the generation of the movements of the cutting head (181) running in the transverse direction of the system during the contour cut is integrated in the control programme of the linear motor.

5. The system according to one of Claims 1-2, **characterised in that** a contour cutting module (13, 51a, 51b, 86, 87, 153, 154, 155, 156, 157, 162, 163) is provided, in which a contour cutting frame (14, 54, 55, 86a, 87a, 138) which is movable in the transverse direction of the system contains at least one vertically arranged cutting wire (14a, D1, D2, D3, D4, D5) and is connected to a drive module (56, 57, 86c, 87c, 140) which produces the movements of the contour cutting frame (14, 54, 55, 86a, 87a, 138) running in the transverse direction of the system during the contour cut.

6. The system according to Claim 5, **characterised in that** the drive module (56, 57, 86c, 87c, 140) contains a contour template from which the movements of the contour cutting frame (14, 54, 55, 86a, 87a, 138) running in the transverse direction of the system during the contour cut are acquired, or
**in that** the drive module (56, 57, 86c, 87c, 140) is optionally coupled to a copying device acquiring the contour of the end product from a contour template or an original model.

7. The system according to Claim 5, **characterised in that** the drive module (56, 57) contains a movement device (56a, 57a) which is coupled to a drive motor (56b, 57b) and which moves the contour cutting frame (54, 55) to and fro in the transverse direction of the system, and
**in that** the generation of the movements of the contour cutting frame (54, 55) running in the transverse direction of the system during the contour cut is integrated in the control programme of the drive motor (56b, 57b), wherein the drive motor is configured, in particular, as a servo motor (56b, 57b) and the movement device is configured, in particular, as a ball screw spindle drive (56a, 57a) extending in the transverse direction of the system.

8. The system according to Claim 5, **characterised in that** a linear motor moving the contour cutting frame (14, 54, 55, 86a, 87a, 138) to and fro in the transverse direction of the system is provided as a drive module, in which the generation of the movements of the contour cutting frame (14, 54, 55, 86a, 87a, 138) running in the transverse direction of the system during the contour cut is integrated in the control programme of the linear motor.

9. The system according to one of Claims 5-8, **characterised in that** the contour cutting frame (86a, 87a, 138) contains two or more vertically arranged cutting wires (86b, 87b, 139) which are arranged spaced apart from one another in the transverse direction of the system.

10. The system according to one of Claims 1-9, **characterised in that** the contour cutting apparatus (150) provides at least one additional cutting module (153) which is provided with at least one stationary cutting tool (D1) which produces in the blocks a straight cut (S1) which is parallel to the longitudinal direction of the system, wherein the additional cutting module (153) is provided, in particular, with a stationary cutting frame which contains at least one cutting wire (D1) which is arranged substantially vertically.

11. The system according to one of Claims 1-10, **characterised in that** the system (1, 20) is provided with a straight transport path running in the longitudinal direction of the system, which extends from the input station (2, 21) through the main cutting station (3, 24) to the dispensing station (4, 25),
**in that** the contour cutting apparatus (12, 51) is arranged in the main cutting station (3, 24) transversely to the linear transport path, and
**in that** an endless product conveyor belt (15, 42) which receives the end products and extends along the linear transport path as far as the dispensing station (4, 25) of the system is arranged downstream of the contour cutting apparatus (12, 51).

12. The system according to Claim 11, **characterised in that** a first cutting station (23) cutting the blocks in the transverse direction of the system is mounted upstream of the main cutting station (24), a first cutting device (37) being provided in said first cutting station with blades (38) which are movable to and fro transversely to the transport path.

13. The system according to one of Claims 1-10, **characterised in that** a rear bearing plate (52, 121) and a transport unit (58a, 122) of the main conveying device are mounted upstream of the contour cutting apparatus (51, 123), wherein the transport unit (58a, 122) moves the blocks forward along the linear transport path in the longitudinal direction of the system (45, 117) and has a rear block slider (59, 122) which is displaceable along the rear bearing plate (52, 121) in the longitudinal direction of the system (45, 117).

14. The system according to one of Claims 1-10, **characterised in that** the contour cutting apparatus (84, 110, 123, 150, 160, 201) is arranged between a rear bearing plate (83, 109, 121, 149, 159, 200) and a front bearing plate (85, 111, 151, 161, 202), and
**in that** the main conveying device provides a first transport unit (88a, 113, 164, 204) mounted upstream of the rear bearing plate (83, 109, 121, 149, 159, 200) and a second transport unit (88b, 114, 165, 207) mounted downstream of the front bearing plate (85, 111, 151, 161, 202),
**in that** the first transport unit (88a, 113, 164, 204) moves the blocks forward in the longitudinal direction of the system and is provided with a rear block slider (89, 164, 206) so as to be displaceable along the rear bearing plate (83, 109, 121, 149, 159, 200) in the longitudinal direction of the system,
and **in that** the second transport unit (88b, 114, 165, 207) moves the blocks backward in the longitudinal direction of the system and is provided with a front block slider (94, 165, 209) which is displaceable along the front bearing plate (85, 111, 151, 161, 202) in the longitudinal direction of the system.

## Revendications

1. Installation, destinée à produire des produits finis par la découpe de blocs de gaufrettes plates ou creuses, dans l'installation étant prévus un poste d'alimentation pour les blocs, au moins un poste de coupe, destiné à découper les blocs et un poste de distribution des produits finis, un poste principal de coupe (3, 48, 77, 108, 129, 148, 158, 199) étant prévu, dans lequel est prévu un dispositif de contourage (12, 51, 84, 110, 135, 150, 160, 166, 174, 201) qui découpe les blocs par coupe des contours, et une trajectoire de transport rectiligne étant prévue, qui s'étend dans la direction longitudinale de l'installation, **caractérisée en ce que** le dispositif de contourage (12, 51, 84, 110, 135, 150, 160, 166, 174, 201) est placé à la transversale de la trajectoire de transport, **en ce que** dans le poste principal de coupe (3, 48, 77, 108, 129, 148, 158, 199) est prévu un système de convoyage principal (6, 58, 88, 112, 134, 152, 164, 165, 204, 207) pour les blocs, placé le long de la trajectoire de transport et **en ce que** le dispositif de contourage (12, 51, 84, 110, 123, 135, 150, 160, 166, 174, 201) prévoit au moins un module de coupe des contours (13, 51a, 51b, 86, 87, 153, 154, 155, 156, 157, 162, 163, 171, 179) qui est muni d'au moins un outil de coupe (14a, 86b, 87b, D1, D2, D3, D4, D5, 172, 180) mobile en va et vient dans la direction transversale de l'installation, qui créé dans les blocs passant dans le dispositif de contourage (12, 51, 84, 110, 123, 135, 150, 160, 166, 174, 201) une coupe de contour (S1, S2, S2a, S3, S3a, S4, S5) dans la direction longitudinale de l'installation.

2. Installation selon la revendication 1, **caractérisée en ce que** le dispositif de contourage (51, 84) comporte deux modules de coupe des contours (51a, 51b, 86, 87), placés l'un derrière l'autre dans la direction longitudinale de l'installation et créant deux différentes coupes de contour, ou **en ce que** le dispositif de contourage (150) comporte trois modules de coupe des contours (153, 154, 155, 156, 157), placés les uns derrière les autres dans la direction longitudinale de l'installation et créant trois différentes coupes de contour (S1, S2, S3, S4, S5).

3. Installation selon l'une quelconque des revendications 1 ou 2, **caractérisée en ce qu'**en tant que module de coupe des contours (171, 179) est prévue une tête de coupe (173, 181) déplaçable dans la direction transversale de l'installation, qui porte au moins un outil de coupe (172, 180) placé à la verticale, traversant dans la direction verticale la trajectoire de transport du bloc et **en ce que** le module de coupe des contours (171, 179) comporte un module d'entraînement relié avec la tête de coupe (173, 181), qui créé les déplacements de la tête de coupe (173, 181), qui pendant la coupe de contours s'écoulent dans la direction transversale de l'installation.

4. Installation selon la revendication 3, **caractérisée en ce que** le module d'entraînement contient un pochoir de contours, par lequel sont repris les déplacements de la tête de coupe s'écoulant dans la direction transversale de l'installation pendant la coupe de contours ou **en ce que** le module d'entraînement est accouplé avec un système de copie reprenant le contour des produits finis à partir d'un pochoir de contours ou d'un modèle original, ou **en ce que** le module d'entraînement contient un système de déplacement qui déplace en va et vient la tête de coupe dans la direction transversale de l'installation, qui est accouplé avec un moteur d'entraînement pour lequel la création des déplacements de la tête de coupe s'écoulant dans la direction transversale de l'installation pendant la coupe de contours est intégrée dans le programme de commande du moteur d'entraînement, ou **en ce qu'**en tant que module d'entraînement est prévu un moteur linéaire (182), déplaçant en va et vient la tête de coupe (181) dans la direction transversale de l'installation, pour lequel la création des déplacements de la tête de coupe (181) qui s'écoulent dans la direction transversale de l'installation pendant la coupe de contours est intégrée dans le programme de commande du moteur linéaire.

5. Installation selon l'une quelconque des revendications 1 ou 2, **caractérisée en ce qu'**il est prévu un module de coupe des contours (13, 51a, 51b, 86, 87, 153, 154, 155, 156, 157, 162, 163) sur lequel un cadre de coupe des contours (14, 54, 55, 86a, 87a, 138) déplaçable dans la direction transversale de l'installation contient au moins un fil de coupe (14a, D1, D2, D3, D4, 05) placé à la verticale et est relié avec un module d'entraînement (56, 57, 86c, 87c, 140) qui crée les déplacements du cadre de coupe des contours (14, 54, 55, 86a, 87a, 138) s'écoulant dans la direction transversale pendant la coupe de contours.

6. Installation selon la revendication 5, **caractérisée en ce que** le module d'entraînement (56, 57, 86c, 87c, 140) contient un pochoir de contours qui reprend les déplacements du cadre de coupe des contours (14, 54, 55, 86a, 87a, 138) s'écoulant dans la direction transversale de l'installation pendant la coupe de contours, ou **en ce que** le module d'entraînement (56, 57, 86c, 87c, 140) est accouplé le cas échéant avec un système de copie, reprenant le contour du produit fini à partir d'un pochoir de contours ou d'un modèle original.

7. Installation selon la revendication 5, **caractérisée en ce que** le module d'entraînement (56, 57) contient un système de déplacement (56a, 57a) accouplé avec un moteur d'entraînement (56b, 57b), qui déplace en va et vient le cadre de coupe des contours (54, 55) dans la direction transversale de l'installation et **en ce que** la création des déplacements du cadre de coupe des contours (54, 55) s'écoulant dans la direction transversale de l'installation pendant la coupe de contours est intégrée dans le programme de commande du moteur d'entraînement (56b, 57b), le moteur d'entraînement étant conçu notamment sous la forme d'un servomoteur (56b, 57b) et le système de déplacement étant conçu notamment sous la forme d'un mécanisme de vis à bille (56a, 57a) s'étendant dans la direction transversale de l'installation.

8. Installation selon la revendication 5, **caractérisée en ce qu'**en tant que module d'entraînement, il est prévu un moteur linéaire, déplaçant en va et vient le cadre de coupe des contours (14, 54, 55, 86a, 87a, 138) dans la direction transversale de l'installation, pour lequel la création des déplacements du cadre de coupe des contours (14, 54, 55, 86a, 87a, 138) s'écoulant dans la direction transversale de l'installation pendant la coupe de contours est intégrée dans le programme de commande du moteur linéaire.

9. Installation selon l'une quelconque des revendications 5 à 8, **caractérisée en ce que** le cadre de coupe des contours (86a, 87a, 138) contient deux ou plusieurs fils de coupe (86b, 87b, 139) placés à la verticale, qui sont placés avec un écart mutuel dans la direction transversale de l'installation.

10. Installation selon l'une quelconque des revendications 1 à 9, **caractérisée en ce que** le dispositif de contourage (150) prévoit au moins un module de coupe (153) supplémentaire, qui est muni d'au moins un outil de coupe (D1) stationnaire qui créé dans les blocs une coupe (S1) droite, parallèle à la direction longitudinale de l'installation, le module de coupe (153) supplémentaire étant muni notamment d'un cadre de coupe stationnaire qui contient au moins un fil de coupe (D1), placé sensiblement à la verticale.

11. Installation selon l'une quelconque des revendications 1 à 10, **caractérisée en ce que** l'installation (1, 20) est munie d'une trajectoire de transport rectiligne, s'écoulant dans la direction longitudinale de l'installation, qui s'étend à partir du poste d'alimentation (2, 21), en traversant le poste principal de coupe (3, 24) jusque dans le poste de distribution (4, 25), **en ce que** le dispositif de contourage (12, 51) est placé dans le poste principal de coupe (3, 24), à la transversale de la trajectoire de transport rectiligne, et **en ce qu'**en aval du dispositif de contourage (12, 51) est placée une bande de convoyage de produits (15, 42) qui reprend les produits finis et qui s'étend le long de la trajectoire de transport rectiligne jusque dans le poste de distribution (4, 25) de l'installation.

12. Installation selon la revendication 11, **caractérisée en ce qu'**en amont du poste principal de coupe (24) est placé un premier poste de coupe (23), découpant les blocs dans la direction transversale de l'installation, dans lequel est prévu un premier dispositif de coupe (37) pourvu de lames (38) déplaçables en va et vient dans la trajectoire de transport.

13. Installation selon l'une quelconque des revendications 1 à 10, **caractérisée en ce qu'**en amont du dispositif de contourage (51, 123) sont placées une plaque d'appui arrière (52, 121) et une unité de transport (58a, 122) du système de convoyage principal, l'unité de transport (58a, 122) déplaçant les blocs vers l'avant le long de la trajectoire de transport rectiligne, dans la direction longitudinale de l'installation (45, 117) et disposant d'un pousseur de blocs (59, 122) arrière, déplaçable le long de la plaque d'appui arrière (52, 121), dans la direction longitudinale de l'installation (45, 117).

14. Installation selon l'une quelconque des revendications 1 à 10, **caractérisée en ce que** le dispositif de contourage (84, 110, 123, 150, 160, 201) est placé entre une plaque d'appui arrière (83, 109, 121, 149, 159, 200) et une plaque d'appui avant (85, 111, 151, 161, 202) et **en ce que** le système de convoyage principal prévoit une première unité de transport (88a, 113, 164, 204), placée en amont de la plaque d'appui arrière (83, 109, 121, 149, 159, 200) et une deuxième unité de transport (88b, 114, 165, 207), placée en aval de la plaque d'appui avant (85, 111, 151, 161, 202), **en ce que** la première unité de transport (88a, 113, 164, 204) déplace les blocs vers l'avant, dans la direction longitudinale de l'installation et est munie d'un pousseur de blocs (89, 164, 206) arrière, déplaçable le long de la plaque d'appui arrière (83, 109, 121, 149, 159, 200), dans la direction longitudinale de l'installation, et **en ce que** la deuxième unité de transport (88b, 114, 165, 207) déplace les blocs vers l'arrière, dans la direction longitudinale de l'installation et est munie d'un pousseur de blocs avant (94, 165, 209), déplaçable le long de la plaque d'appui avant (85, 111, 151, 161, 202), dans la direction longitudinale de l'installation.
